# EUROPEAN PATENT APPLICATION

(11) **EP 3 670 019 A1**
(43) Date of publication of application: **24.06.2020**
(21) Application number: 18382977.9
(22) Date of filing: 21.12.2018
(51) Int. Cl.: B21D 22/16

(54) **METHODS AND MACHINES FOR PRODUCING TUBES BY MEANS OF FLOW FORMING**

(71) Applicant: Tubacex Innovación A.I.E., 48160 Derio - Vizcaya (ES)
(72) Inventor: López, Alejandra, 48160 Derio, Vizcaya (ES); Navarro, Aitor, 48160 Derio, Vizcaya (ES)
(74) Representative: Balder IP Law, S.L.

(57) **Abstract**

A method for producing a tube (101-104), the method comprising: providing a preform (1a-ic,70) in a mandrel (2), the preform (1a-1c,70) having two ends; flow forming the preform (1a-1c,70) with a plurality of rollers (4-5,31-38) such that in one flow forming pass neither one of the two ends of the preform (1a-1c,70) is flow formed, thereby producing the tube (101-104); and mechanically forming mechanical connection ends on the two ends of the tube (101-104). Also, a seamless tube (101-104), a pipeline comprising a plurality of seamless tubes (101-104), and a machine for flow forming a preform (1a-1c,70) into a tube (101-104).

## Description

### TECHNICAL FIELD

The present invention relates to the production of tubes. More specifically, the present invention relates to producing tubes with a flow forming process.

### STATE OF THE ART

Flow forming is a cold working process suitable for the production of tubes that, owing to its forming capabilities, has gained a lot of interest recently by the metallurgical industry.

The use of tubes is particularly important in industries such as oil&gas, which requires pipelines for transporting extracted substances from an extraction source to a destination. Pipelines are formed as a concatenation of tubes that must cope with high levels of pressures and stresses. These levels may be even greater when the tubes are underwater. In addition to the high pressure, there are many corrosive and erosive agents in the sea that corrode the tubes, thereby adversely influencing a structural integrity thereof and leading to the failure of the tubes. Tubes and pipelines that are used or located in such harsh environments should feature, inter alia, high strength and high resistance to corrosion cracking and pitting.

The tubes (and, thus, the pipelines) may fail because they are subjected to such adverse phenomena, but also the joints of the tubes for forming the pipelines may fail or break for similar reasons. In this regard, welding the tubes one to another so as to form a pipeline is a critical process: if the joints between the tubes are not properly welded, defects such as phase precipitation may occur and cause additional stresses to the tubes which, in turn, adversely influence the resistance against corrosion. Moreover, the process of welding tubes is particularly expensive.

The production of longer tubes is particularly interesting because the number of welded joints is reduced, thereby reducing the probability that the pipeline will fail and the cost thereof.

Patent document WO-2015/200325-A1 discloses a flowforming process for producing a corrosion resistant alloy tube. The tube is formed by providing a plate, which is deformed such that it features a hollow tubular shape, at which point the deformed plate is welded to join together the abutting ends of the plate, the tube thus having a welded seam. Then, the tube is flowformed. Even though the welded seam is not visible due to the flowforming process, the mechanical properties of the tube are adversely influenced by the seam and, thus, the tube is prone to failure because of it.

Patent document US-8479549-B1 relates to a method of producing cold-worked centrifugal cast tubular products in which the tubular workpiece casted of a corrosion resistant alloy, has material from its inner diameter removed, and then a metal forming process reduces the walls of the tubular workpiece. When the metal forming process is flowforming, the walls of the workpiece may be reduced with several passes because the workpiece is not able to process large reductions in one pass, hence the progressive reduction of walls may be provided with subsequent flowforming passes.

There is an interest in producing both tubes and pipelines that may be used for transporting substances such as oil or gas, in environments characterized by demanding conditions, which influence the minimum necessary wall thickness and/or outer diameter of both the tubes and the pipelines. Further, there is also an interest in producing seamless tubes that are as long as possible in order to reduce the number of tubes for forming a pipeline and, additionally, the costs of welding the tubes, and/or even completely suppressing such costs by not requiring the welding of tubes. It would also be convenient to make the method for producing these tubes and pipelines as effective as possible in terms of productivity.

### DESCRIPTION OF THE INVENTION

A first aspect of the invention relates to a method for producing a tube, the method comprising: providing a preform in a mandrel, the preform having two ends; flow forming the preform with a plurality of rollers such that in one flow forming pass neither one of the two ends of the preform is flow formed, thereby producing the tube; and mechanically forming mechanical connection ends on the two ends of the tube.

The present method makes possible to produce tubes suitable for forming pipelines without requiring that each pair of tubes is welded together in order to concatenate them. To this end, the tubes produced have mechanical connections or connectors at both ends thereof for mechanically joining the tube to another one with mating mechanical connection or connector. As no welding is necessary to form the pipelines, the time and the cost involved in installing pipelines are both decreased, and the safety of the operators is increased since they are less exposed to the dangers that are generally present in the environments where the pipelines are installed, particularly during the welding operations. Moreover, the pipelines are mechanically more reliable because, in comparison to welded connection, the mechanical connections produce fewer stress concentration areas and fewer critical corrosion areas in the pipelines.

The tubes produced have mechanical connection ends integrally formed thereon, that is to say, the tubular body and the mechanical connection ends are a single piece. As the tubes do not have the mechanical connections or connectors attached thereto by means of welding, which is a prior art solution, they are mechanically superior owing to the fewer stress concentration areas. In addition, the time and the cost for producing the tubes are both reduced because no mechanical connection has to be welded on the tube; and the machining costs are also reduced.

The ends of the preform are not flow formed in one flow forming pass so that the same have a greater wall thickness and/or a greater outer diameter that enables the formation of the mechanical connection ends without providing any additional piece or preform (which may also generate sealing issues). The portion of the preform that is flow formed in said one flow forming pass has its wall thickness and/or outer diameter reduced, thereby increasing the length thereof and, thus, the length of the resulting tube. In some embodiments, the one flow forming pass is the only flow forming pass that the preform is subjected to, whereas in some other embodiments, the one flow forming pass is subsequent to one or more other flow forming passes in which one, both or none of the ends of the preform is flow formed (so as to lengthen the preform and reduce the wall thickness thereof when the dimensions of the preform are such that allow several flow forming passes to produce the tube), i.e. the one flow forming pass is the last flow forming pass that the preform is subjected to.

When the preform is flow formed into the tube, each of the four rollers is rotated around a rotation axis thereof and the mandrel is rotated around a rotation axis thereof, thereby rotating the preform around the rotation axis of the mandrel. While the rollers are rotated with respect to the mandrel and are brought into contact with the preform, the rollers are displaced relative to the mandrel in a direction along an axial direction of the mandrel such that the preform flows along a flow direction. Each roller is provided with a motor that rotates the roller in a direction opposite to the rotation direction of the mandrel (which is also provided with a motor); namely, if the mandrel rotates in a clockwise direction the rollers rotate in a counterclockwise direction and vice versa.

The preform is secured to the mandrel at a first end thereof; the flow direction is defined by a vector going from the first end of the mandrel towards a second end of the mandrel (opposite to the first end). In forward flow forming the four rollers are displaced towards a second end of the mandrel, whereas in backward flow forming the four rollers are displaced towards the first end.

The flow forming is carried out while the preform is at a temperature below a recrystallization temperature thereof.

In some embodiments, each of the two mechanical connection ends comprises one of: a male thread, a female thread, a male mechanical connector, and a female mechanical connector. In some of these embodiments, the two mechanical connection ends comprise a same one of: a male thread, a female thread, a male mechanical connector, or a female mechanical connector.

The mechanical connection ends may be formed with procedures known in the art, preferably, but not limited to, subtractive procedures so that the mechanical integrity of the ends is not significantly reduced. For example, the ends may be machined for forming thereon threads or mechanical connectors known in the art that cooperate with the threads or mechanical connectors of other tubes for mechanically joining the tubes together. In some cases, the subtractive procedure is a machining procedure consisting in chip removal, for instance to provide the threads.

In some embodiments, the method further comprises: forming a recess on a portion of the preform not comprising any one of the two ends of the preform; and bringing into contact each roller of the plurality of rollers with the preform in the portion thereof. In these embodiments, the plurality of rollers is arranged such that each roller is spaced apart from remaining rollers in an axial direction of the mandrel; each roller of the plurality of rollers has a leading angle; and the plurality of rollers is arranged so as to flow form the preform with increasing leading angles.

The ends of the preform are left with a greater wall thickness and/or greater outer diameter during the flow forming process by first providing a recess on a portion of the preform so that the rollers are not brought into contact with the preform at the ends but at a certain distance from the ends. Accordingly, the portion of the preform is, for instance, machined so as to form a recess that the rollers will first contact when the flow forming pass is to be made; the portion and, thus, the recess shall have a length that is at least a distance from a first of the plurality of rollers to a last of the plurality of rollers in the axial direction of the mandrel. As the rollers are around the preform, the portion comprises the entire perimeter of the preform along the length of the portion so that the recess is formed around the entire cross-section of the preform.

Once the rollers are brought into contact with the preform at the portion, the rollers flow form the preform in order to provide the tube.

In some embodiments, a distance between a first roller of the plurality of rollers and a last roller of the plurality of rollers in the axial direction of the mandrel is lower than or equal to 120 mm. In some of these embodiments, the distance is lower than or equal to 80 mm.

In some embodiments, the portion is at a distance from one end of the preform equal to or greater than any one of the following values: 200 mm, 300 mm, 450 mm, 500 mm, 600 mm and 750 mm; preferably, the distance is equal to or smaller than any one of the following values: 1000 mm, 750 mm, and 600 mm. In some embodiments, the portion is at a distance from one end of the preform equal to or greater than any one of the following values: 1,0%, 2,0%, 5,0%, and 7,5% of a total length of the preform; preferably, the distance is equal to or smaller than any one of the following values: 12,0%, 10,0%, 7,5%, and 5,0%.

The portion of the preform may start at a distance from one of the ends that is several millimeters, e.g. 450 mm. In some cases, this distance is 1,0% or more of the total length of the preform, that is to say, the portion starts at a position (in the axial direction) of 1,0% of the total length from one end of the preform or beyond that position, e.g. 5,5%, 6,5%, etc.

In some embodiments, the plurality of rollers comprises four rollers; a first roller of the four rollers has a first leading angle A, a second roller of the four rollers has a second leading angle B, a third roller of the four rollers has a third leading angle C, and a fourth roller of the four rollers has a fourth leading angle D, with A < B < C < D; the four rollers are arranged such that each roller is spaced apart from remaining rollers in an axial direction of the mandrel, and the four rollers are arranged such that they contact the preform in the mandrel with increasing leading angles; and the first roller is diametrically opposed to the second roller in a radial direction of the mandrel, and the third roller is diametrically opposed to the fourth roller in the radial direction of the mandrel.

The arrangement of the rollers of these embodiments makes possible to produce tubes with integrally formed mechanical connection ends and with dimensions such that a pitching movement could appear during the manufacturing process, particularly at the unclamped end of the preform while it is flow formed, and even at the free end of the mandrel. Methods and machines of the prior art for manufacturing tubes by means of flow forming are influenced by the appearance of such pitching movements, which may be like an oscillation. In this regard, the intensity of the pitching movements is such that the tube produced has an irregular finishing as the surface thereof, the outer diameter thereof, and/or the wall thickness thereof cannot be provided accurately. The tube produced is more prone to failures due to such structural irregularity or irregularities. Accordingly, the existence of this pitching influences the maximum dimensions of the tubes to be produced since they cannot be correctly processed.

The pitching movement appears and has a greater intensity the larger the tubes to be produced must be, for example when the tube to be produced shall comprise an outer diameter greater than or equal to 300 mm and/or a wall thickness greater than or equal to 15,0 mm. For producing such tubes, the leading angles of the rollers are made smaller and the distances between rollers are made longer (compared with the leading angles and the distances when smaller tubes are produced), and this exacerbates the pitching movement. The leading angles of the rollers (i.e. A, B, C and D) are the angles formed between the leading edge of the respective roller and an axial axis of the mandrel, for instance a rotation axis thereof.

The arrangement of the rollers reduces the intensity of the pitching movement and also reduces the appearance of the same when preforms are processed in order to produce larger tubes.

In addition, the strains applied by each roller to the preform are also balanced. In this sense, the loads are more balanced, so the maximum load on each roller can be reduced. Roller life is preserved, but more than that the roller housing life is preserved: bearings are cycling with a constant load and not with an oscillating load, so the fatigue life is longer. Accordingly, fewer structural irregularities are present in the tube produced and larger tubes may be produced (for instance, by way of example, tubes with an outer diameter of up to 630 mm and a wall thickness of 16 mm) with the method of the present disclosure, this is so because the material flows better and more homogenously than with methods of the prior art, in which the mandrel starts to rotate and oscillate, and also the loads oscillate and are more variable.

The arrangement of the first roller being diametrically opposed (with a relative angle between 165º and 195º, preferably being 180º or as close to 180º as possible) to the second roller in a radial direction of the mandrel, and the third roller being diametrically opposed (with a relative angle between 165º and 195º, preferably being 180º or as close to 180º as possible) to the fourth roller in the radial direction of the mandrel reduces the appearance and intensity of the pitching movement. In this respect, the different rollers are not at a same distance from an end of the mandrel, for example the first end of the mandrel where the preform can be secured; accordingly, there is some distance between each pair of rollers in a direction parallel to the axial direction of the mandrel. The diametrical opposition of the rollers is clearly appreciable when the rollers are viewed in the axial direction of the mandrel.

In some embodiments, the third roller is after the first roller and before the second roller in a rotation direction of the mandrel when viewed in the axial direction of the mandrel.

This arrangement of the third roller with respect to the first and second rollers may further reduce the intensity of the pitching movement.

In some embodiments, the plurality of rollers is offset with 90º angles.

By providing the rollers such that they are evenly distributed around the rotation axis of the mandrel with 90º angle differences (when viewed in the axial direction of the mandrel), the intensity of the pitching movement is further reduced. In some cases, the offset angles are between 85º and 95º.

In some embodiments, the preform is a seamless preform.

The tube produced does not have any seams that need to be welded (i.e. it is a seamless tube) and, thus, the mechanical properties thereof are more adequate for harsh environments, for instance in oil&gas applications. Accordingly, the method does not comprise welding the preform.

By way of example, the preform may result from hot working a casting into a cylindrical bar, and then trepanning (i.e. boring a hole through the bar by cutting an annular groove and removing a solid core; the solid core may then be used in another process, thus the material is not lost) the cylindrical bar; the cylindrical bar is trepanned while being cold, and during the trepanning process cutting fluid is applied thereto. By way of another example, the preform may result from hot working a casting into a tube or a workpiece with a tubular shape, and then machining an inner diameter of said tube or workpiece. In these examples, hot working the casting comprises rolling the casting, forging the casting, or a combination thereof. Further, in these examples, the cylindrical bar or the workpiece resulting from the hot working may be subjected to quenching and/or solution annealing; the trepanned cylindrical bar or the machined tube or workpiece may also be subjected to solution annealing.

In some embodiments, the first leading angle A is greater than or equal to 1º and lower than or equal to 8º, the second leading angle B is lower than or equal to 15º, the third leading angle C is lower than or equal to 20º, and the fourth leading angle D is lower than or equal to 25º. In some of these embodiments, the first leading angle A is greater than or equal to 2º. In some of these embodiments, the first leading angle A is lower than or equal to 6º. In some of these embodiments, the second leading angle B is greater than or equal to 6º. In some of these embodiments, the third leading angle C is greater than or equal to 8º. In some of these embodiments, the fourth leading angle D is greater than or equal to 12º.

These leading angles make possible to produce tubes having an outer diameter greater than or equal to 300 mm and/or a wall thickness greater than or equal to 15,0 mm.

In some embodiments, a distance between the first roller and the fourth roller in the axial direction of the mandrel is lower than or equal to 120 mm. In some of these embodiments, the distance is lower than or equal to 80 mm.

The provision of such distance makes possible to produce tubes having an outer diameter greater than or equal to 300 mm and/or a wall thickness greater than or equal to 15,0 mm.

The distance between the first roller and the fourth roller in the axial direction of the mandrel is greater than 0 mm. In some embodiments, the distance is greater than 20 mm, and/or greater than 40 mm, and/or greater than 60 mm, and/or greater than 80 mm.

In some embodiments, a first pair of rollers (of the four rollers) adjacent in the axial direction of the mandrel are spaced apart a first distance d₁, and a second pair of rollers (of the four rollers) adjacent in the axial direction of the mandrel are spaced apart a second distance d₂. In some of these embodiments, a third pair of rollers (of the four rollers) adjacent in the axial direction of the mandrel are spaced apart a third distance d₃.

In some embodiments, the step of flow forming the preform with the plurality of rollers is carried out a single time.

The method makes possible to produce large tubes with a single flow forming pass (i.e. the one flow forming pass). To this end, the flow forming achieves a wall reduction sufficient to produce the tube out of the preform; for example, the step of flow forming the preform with the plurality of rollers at least reduces thickness of walls of the preform by 20% in one pass, and/or by 40% in one pass, and/or by 50% in one pass, and/or by 70% in one pass, and/or by 80% in one pass, for example by 70% to 80% in one pass.

In some other embodiments, the step of flow forming the preform with the plurality of rollers is carried out two times.

After the preform has been subjected to the first pass of flow forming, and before being subjected to the second pass of flow forming, the preform may be annealed, and in some cases the preform may also be quenched or cooled in air. Further, in some of these embodiments, when tubes with large wall thickness and/or large outer diameter are to be produced, every time the preform is subjected to a flow forming pass the arrangement of the rollers advantageously reduces and/or even prevents the appearance of the pitching movement, hence the preform is not incorrectly processed in each of the flow forming passes carried out. In these embodiments, the first pass of flow forming may flow form one, both or none of the ends of the preform, whereas the second pass of flow forming is the one flow forming pass in which neither one of the two ends is flow formed.

In some embodiments, the step of flow forming the preform with the plurality of rollers at least reduces thickness of walls of the preform by 20% in one pass. In some of these embodiments, the step of flow forming the preform with the plurality of rollers at least reduces thickness of walls of the preform by 40%, and/or by 50% in one pass. In some of these embodiments, the step of flow forming the preform with the plurality of rollers reduces thickness of walls of the preform between 70% and 80% in one pass.

In some embodiments, the tube produced comprises an outer diameter greater than or equal to 200 mm and lower than or equal to 630 mm. In some of these embodiments, the outer diameter is greater than or equal to 300 mm, and/or 400 mm, and/or 500 mm. In some of these embodiments, the outer diameter is lower than or equal to 500 mm, and/or 400 mm.

In some embodiments, the tube produced comprises a wall thickness greater than or equal to 15,0 mm and lower than or equal to 40,0 mm. In some of these embodiments, the wall thickness is lower than or equal to 35,0 mm, and/or 25,0 mm. In some of these embodiments, the wall thickness is greater than or equal to 20,0 mm, and/or 30,0 mm.

In some embodiments, the step of flow forming the preform with the four rollers comprises flow forming the preform with the four rollers such that the tube produced at least comprises first one or more portions and second one or more portions, the first one or more portions comprising a first wall thickness and/or a first outer diameter, and the second one or more portions comprising a second wall thickness and/or a second outer diameter. In some of these embodiments, each of the first and second wall thicknesses is greater than or equal to 15,0 mm and lower than or equal to 40,0 mm. In some of these embodiments, each of the first and second outer diameters is greater than or equal to 200 mm and lower than or equal to 630 mm.

The tube produced may comprise a variable wall thickness and/or a variable outer diameter. To this end, when carrying out forward flow forming, the four rollers are brought into contact with the preform at a position (in the axial direction) of the preform that is at least 1,0% of a length of the preform away from a first end of the preform so that the rollers are displaced towards the second end of the preform, whereas when carrying out backward flow forming, the four rollers are brought into contact with the preform at a position of the preform that is at least 1,0% of a length of the preform away from the second end of the preform so that the rollers are displaced towards the first end of the preform. The several wall thicknesses and/or outer diameters may be provided by modifying the distances with which the different rollers are spaced apart.

In some embodiments, the tube produced comprises a length greater than or equal to 5,0 m and lower than or equal to 20,0 m. In some of these embodiments, the length is greater than or equal to 10,0 m and lower than or equal to 18,0 m. In some of these embodiments, the length is greater than or equal to 12,0 m and lower than or equal to 18,0 m.

In some embodiments, the tube comprises one of the following: an Austenitic Stainless Steel (e.g. UNS S30400, UNS S31600), a Martensitic Stainless Steel (e.g. UNS S41427), an Austeno-ferritic Stainless Steel (e.g. UNS S31803, UNS S32750, UNS S32760), an Austenitic Nickel base Alloy (e.g. UNS N06625, UNS N08825), and a Super-Austenitic Stainless Steel (e.g. UNS N08028).

In some embodiments, the method further comprises heat treating the tube produced, preferably prior to the step of mechanically forming the mechanical connection ends. In some of these embodiments, the method further comprises heat treating the preform prior to the step of flow forming the preform. In some of these embodiments, heat treating the tube produced comprises subjecting the tube produced to solution annealing.

Subjecting the tube resulting from the flow forming step, and also the preform prior to the flow forming step, to a heat treatment may improve the mechanical properties thereof. The heat treatment may be applied to the preform and/or tube based on the material thereof and/or the mechanical properties of the same that are being sought. Also, the solution annealing may also be applied to the tube based on the material thereof and/or the mechanical properties of the same that are being sought.

In some embodiments, the preform comprises an outer diameter greater than or equal to 200 mm and/or 300 mm, preferably greater than or equal to 320 mm, and lower than or equal to 650 mm. In some of these and in other embodiments, the preform comprises a wall thickness greater than or equal to 30,0 mm and lower than or equal to 80,0 mm. In some of these embodiments, the wall thickness of the preform is greater than or equal to 40,0 mm and lower than or equal to 60,0 mm.

In some embodiments, the method further comprises: providing a plurality of cooling ducts with at least as many cooling ducts as rollers are in the plurality of rollers, each cooling duct being adjacent to a roller of the plurality of rollers, preferably to a different roller of the plurality of rollers; and ejecting coolant fluid on the preform. In these embodiments, the step of ejecting the coolant fluid on the preform is carried out simultaneously with the step of flow forming the preform with the plurality of rollers.

Ejecting a coolant or cooling fluid in the contact point between the roller and the preform has a positive effect on avoiding local temperature increase in the contact points, thereby maintaining the temperature of the preform below the recrystallization temperature thereof so that the preform is cold worked by means of flow forming.

In some embodiments, the method further comprises providing a cooling circuit inside the mandrel.

The cooling circuit provides a uniform temperature along the preform, thereby avoiding local stresses which may cause a damage in the preform or unpredictable properties in the resulting tube. Further, it is important that the mandrel itself is also cooled, to avoid possible local stresses or deformations in the mandrel that may render it inoperable for the production of tubes.

In some embodiments, each roller of the plurality of rollers is arranged such that a rotation axis thereof is parallel to the rotation axis of the mandrel. In some other embodiments, each roller of the plurality of rollers is arranged such that there is an angle between a rotation axis of the rollers and the rotation axis of the mandrel.

In some embodiments, the method further comprises: sensing pressure radially exerted on the preform by each roller of the plurality of rollers; and adjusting, for at least one roller of the plurality of rollers during the step of flow forming the preform, a position of the roller relative to the other rollers in the axial direction of the mandrel and/or a position of the roller relative to the preform in the radial direction of the mandrel, the adjustment being made with a controlling device and based on the sensed pressures radially exerted on the preform.

In order to produce a tube with fewer irregularities or defects, the pressures radially exerted on the preform by all the rollers must be balanced so that the preform is not subject to more pressure from one side than from others, or so that at least any unbalance in these pressures is as reduced as possible. Since the rollers are spaced apart in the axial direction of the mandrel, balancing the pressure applied to the preform by the rollers does not only entail that the total sum thereof is as close as possible to zero, but also that the sum of the moments of force is as close as possible to zero.

In the prior art, such balancing is carried out manually by operators that adjust the position of the rollers and the pressures exerted by the rollers at the beginning of the tube manufacturing process. In these embodiments, however, the machine for flow forming the preform is provided with a closed-loop control mechanism or system that automatically and dynamically adjusts the position of one or more rollers during the flow forming process, thereby reducing the time (and, thus, the cost) for manufacturing tubes and increasing the quality of the tubes produced; the first is due to the fact that the operators do not have to make the adjustments manually, whereas the latter is due to the fact that the adjustments may be made dynamically throughout the entire flow forming process and with more precision than if made by operators.

To this end, the machine comprises the controlling device or controller (i.e. a computing device) that receives both the measurements of a plurality of sensors that measures the amount of pressure that each roller radially applies to the preform (or the amount of pressure that each roller supports due to the pressure radially applied to the preform, which is the same due to action-reaction) during the flow forming process and data indicative of the position of the rollers in the axial direction of the mandrel, which may be provided by sensors such as encoders. The controller digitally computes both the sum of the pressures radially exerted on the preform and the sum of moments of force on the preform based on the measurements received. Then, the controller digitally computes the position adjustments that have to be made to minimize each of the sum of pressures and the sum of moments of force; the position adjustments are provided to the actuators of the position of the rollers, which move the respective roller in the axial direction and/or the radial direction of the mandrel as commanded by the controller. As the sensors provide the measurements during the entire flow forming process, the controller may repeatedly digitally determine whether any position adjustments have to be made as the preform is flow formed, thereby improving the quality of the produced tube. This closed-loop control may be applied as soon as the rollers are brought into contact with the preform.

The controller is configured in such a manner that it cannot adjust the position of one or more rollers in the axial direction of the mandrel such that a pair of rollers would not be spaced apart in this direction, accordingly the controller always determines which positions adjustments have to be made that will keep the rollers spaced apart in the axial direction of the mandrel.

The controller may be configured such that any position adjustments that have to be made are applied faster or slower, for example by means of PID control, i.e. proportional-integral-derivative control. The controller may also be configured such that the position of the rollers cannot be beyond certain predetermined positions even if the machine is capable of moving the rollers beyond those predetermined positions, this makes possible to adapt the possible position adjustments to preforms and/or tubes of different characteristics.

Further, the controller may also be configured such that it limits the position adjustments that the controller computes based on one or more geometrical parameters of the manufacturing process, such as a reduction of the wall thickness to be reached in the flow forming process, a diameter of the resulting tube, a diameter of the preform, a wall thickness of the preform, a diameter of the rollers, etc. To this end, the controller may receive any of these parameters from another device where the parameters are stored (e.g. through a wired or wireless communications link, with a computer readable storage medium, etc.), have them stored in at least one memory thereof, or via user input, for instance using a tactile screen, a keyboard, etc.

The controller may also be configured to store in a memory thereof the position adjustments that it has digitally computed during a flow forming process and retrieve the same in posterior flow forming processes so as to digitally compute faster the necessary position adjustments in these posterior processes. In this sense, the controller retrieves such previous position adjustments and attempts to compute the position adjustments for balancing the pressures and moments of force applied by the rollers starting from these previous position adjustments so that each of the sum of pressures and the sum of moments of force are minimized. This operation usually results in faster adjustments when the preforms have similar characteristics as similar position adjustments are generally necessary.

In some embodiments, the at least one roller for which the position is adjusted comprises one or some rollers of the plurality of rollers, the one or some rollers not comprising the roller of the plurality of rollers that is closest, in the axial direction of the mandrel, to a support clamping the preform during the step of flow forming.

The roller of the plurality of rollers that is in the forward-most position in the direction of the flow forming process does not have its position adjusted so that it is used as reference for the control process. Accordingly, one or more of the remaining rollers, that is, one or more of the rollers after the forward-most roller have their position adjusted by the controlling device in the axial direction and/or the radial direction of the mandrel so as to minimize both the sum of pressures and the sum of moments of force on the preform.

A second aspect of the invention relates to a seamless tube having: an outer diameter greater than or equal to 200 mm and lower than or equal to 630 mm; a wall thickness greater than or equal to 15,0 mm and lower than or equal to 40,0 mm; the seamless tube is of one of the following: an Austenitic Stainless Steel (e.g. UNS S30400, UNS S31600), a Martensitic Stainless Steel (e.g. UNS S41427), an Austeno-ferritic Stainless Steel (e.g. UNS S31803, UNS S32750, UNS S32760), an Austenitic Nickel base Alloy (e.g. UNS N06625, UNS N08825), and a Super-Austenitic Stainless Steel (e.g. UNS N08028); and both ends of the seamless tube have mechanical connection ends integrally formed thereon.

In some embodiments, each of the two mechanical connection ends comprises one of: a male thread, a female thread, a male mechanical connector, and a female mechanical connector.

In some embodiments, the outer diameter is greater than or equal to 300 mm, and/or 400 mm, and/or 500 mm. In some of these embodiments, the outer diameter is lower than or equal to 500 mm, and/or 400 mm.

In some embodiments, the wall thickness is lower than or equal to 35,0 mm, and/or 25,0 mm. In some of these embodiments, the wall thickness is greater than or equal to 20,0 mm, and/or 30,0 mm.

In some embodiments, the tube further comprises a length greater than or equal to 5,0 m and lower than or equal to 20,0 m. In some of these embodiments, the length is greater than or equal to 10,0 m. In some of these embodiments, the length is greater or equal to than 12,0 m. In some of these embodiments, the length is lower than or equal to 18,0 m.

In some embodiments, the seamless tube further comprises first one or more portions and second one or more portions, the first one or more portions comprising a first wall thickness and/or a first outer diameter, and the second one or more portions comprising a second wall thickness and/or a second outer diameter. In some of these embodiments, each of the first and second wall thicknesses is greater than or equal to 15,0 mm and lower than or equal to 40,0 mm. In some of these embodiments, each of the first and second outer diameters is greater than or equal to 200 mm and lower than or equal to 630 mm.

A third aspect of the invention relates to a seamless tube obtainable with a method according to the first aspect of the invention.

A fourth aspect of the invention relates to a pipeline comprising a plurality of seamless tubes according to the second aspect of the invention or the third aspect of the invention, each seamless tube being mechanically connected at each end thereof to another seamless tube by means of the mechanical connection ends of the seamless tubes, and each of a first seamless tube and a last seamless tube of the pipeline being only connected to one seamless tube.

Similar advantages as those described for the first aspect of the invention are also applicable to the second, the third and the fourth aspects of the invention.

A fifth aspect of the invention relates to a method for producing a tube, the method comprising: providing a preform in a mandrel; and flow forming the preform with four rollers thereby producing the tube; a first roller of the four rollers has a first leading angle A, a second roller of the four rollers has a second leading angle B, a third roller of the four rollers has a third leading angle C, and a fourth roller of the four rollers has a fourth leading angle D, with A < B < C < D; the four rollers are arranged such that each roller is spaced apart from remaining rollers in an axial direction of the mandrel, and the four rollers are arranged such that they contact the preform in the mandrel with increasing leading angles; and the first roller is diametrically opposed to the second roller in a radial direction of the mandrel, and the third roller is diametrically opposed to the fourth roller in the radial direction of the mandrel.

The present method makes possible to produce tubes with dimensions such that a pitching movement could appear during the manufacturing process, particularly at the unclamped end of the preform while it is flow formed, and even at the free end of the mandrel.

The pitching movement appears and has a greater intensity the larger the tubes to be produced must be, for example when the tube to be produced shall comprise an outer diameter greater than or equal to 300 mm and/or a wall thickness greater than or equal to 15,0 mm. For producing such tubes, the leading angles of the rollers are made smaller and the distances between rollers are made longer (compared with the leading angles and the distances when smaller tubes are produced), and this exacerbates the pitching movement. The leading angles of the rollers (i.e. A, B, C and D) are the angles formed between the leading edge of the respective roller and an axial axis of the mandrel, for instance a rotation axis thereof.

The present method, owing to the arrangement of the rollers, reduces the intensity of the pitching movement and also reduces the appearance of the same when preforms are processed in order to produce larger tubes.

In some embodiments, the third roller is after the first roller and before the second roller in a rotation direction of the mandrel when viewed in the axial direction of the mandrel.

In some embodiments, the four rollers are offset with 90º angles. In some cases, the offset angles are between 85º and 95º.

In some embodiments, the preform is a seamless preform.

In some embodiments, the method further comprises: forming a recess on a portion of the preform comprising one of two ends of the preform; and bringing into contact each roller of the four rollers with the preform in the portion thereof.

By forming a recess at an end of the preform the rollers may be brought into contact with the preform such that the flow forming process is started in a smooth manner despite the separation of the rollers in the axial direction of the mandrel and their increased leading angles. The recess is formed such that it enables all the rollers to be contacting the preform when the flow form process starts, therefore in some cases the recess has a plurality of portions, each portion having a different depth in the radial direction of the preform. The recess assists in balancing the amounts of pressure radially exerted on the preform by the rollers and, therefore, the amounts of pressure supported by each of the rollers, thereby making the flow forming process start more smoothly.

In some embodiments, the step of flow forming the preform with the four rollers comprises flow forming the preform with the four rollers such that in one flow forming pass neither one of the two ends of the preform is flow formed, thereby producing the tube; and the method further comprises mechanically forming mechanical connection ends on the two ends of the tube. In some of these embodiments, the method further comprises: forming a recess on a portion of the preform not comprising any one of the two ends of the preform; and bringing into contact each roller of the four rollers with the preform in the portion thereof.

In some of these embodiments, the one flow forming pass is the only flow forming pass that the preform is subjected to, whereas in some other embodiments, the one flow forming pass is subsequent to one or more other flow forming passes in which one, both or none of the ends of the preform is flow formed (so as to lengthen the preform and reduce the wall thickness thereof when the dimensions of the preform are such that allow several flow forming passes to produce the tube), i.e. the one flow forming pass is the last flow forming pass that the preform is subjected to.

In some embodiments, the portion is at a distance from one end of the preform equal to or greater than any one of the following values: 200 mm, 300 mm, 450 mm, 500 mm, 600 mm and 750 mm; preferably, the distance is equal to or smaller than any one of the following values: 1000 mm, 750 mm, and 600 mm. In some embodiments, the portion is at a distance from one end of the preform equal to or greater than any one of the following values: 1,0%, 2,0%, 5,0%, and 7,5% of a total length of the preform; preferably, the distance is equal to or smaller than any one of the following values: 12,0%, 10,0%, 7,5%, and 5,0%.

In some embodiments, the first leading angle A is greater than or equal to 1º and lower than or equal to 8º, the second leading angle B is lower than or equal to 15º, the third leading angle C is lower than or equal to 20º, and the fourth leading angle D is lower than or equal to 25º. In some of these embodiments, the first leading angle A is greater than or equal to 2º. In some of these embodiments, the first leading angle A is lower than or equal to 6º. In some of these embodiments, the second leading angle B is greater than or equal to 6º. In some of these embodiments, the third leading angle C is greater than or equal to 8º. In some of these embodiments, the fourth leading angle D is greater than or equal to 12º.

In some embodiments, a distance between the first roller and the fourth roller in the axial direction of the mandrel is lower than or equal to 120 mm. In some of these embodiments, the distance is lower than or equal to 80 mm.

In some embodiments, a first pair of rollers adjacent in the axial direction of the mandrel are spaced apart a first distance d₁, and a second pair of rollers adjacent in the axial direction of the mandrel are spaced apart a second distance d₂. In some of these embodiments, a third pair of rollers adjacent in the axial direction of the mandrel are spaced apart a third distance d₃.

In some embodiments, the step of flow forming the preform with four rollers is carried out a single time.

In some other embodiments, the step of flow forming the preform with four rollers is carried out two times.

In some embodiments, the step of flow forming the preform with four rollers at least reduces thickness of walls of the preform by 20% in one pass. In some of these embodiments, the step of flow forming the preform with four rollers at least reduces thickness of walls of the preform by 40%, and/or by 50% in one pass. In some of these embodiments, the step of flow forming the preform with four rollers reduces thickness of walls of the preform between 70% and 80% in one pass.

In some embodiments, the tube produced comprises an outer diameter greater than or equal to 200 mm and lower than or equal to 630 mm. In some of these embodiments, the outer diameter is greater than or equal to 300 mm, and/or 400 mm, and/or 500 mm. In some of these embodiments, the outer diameter is lower than or equal to 500 mm, and/or 400 mm.

In some embodiments, the tube produced comprises a wall thickness greater than or equal to 15,0 mm and lower than or equal to 40,0 mm. In some of these embodiments, the wall thickness is lower than or equal to 35,0 mm, and/or 25,0 mm. In some of these embodiments, the wall thickness is greater than or equal to 20,0 mm, and/or 30,0 mm.

In some embodiments, the step of flow forming the preform with four rollers comprises flow forming the preform with the four rollers such that the tube produced at least comprises first one or more portions and second one or more portions, the first one or more portions comprising a first wall thickness and/or a first outer diameter, and the second one or more portions comprising a second wall thickness and/or a second outer diameter. In some of these embodiments, each of the first and second wall thicknesses is greater than or equal to 15,0 mm and lower than or equal to 40,0 mm. In some of these embodiments, each of the first and second outer diameters is greater than or equal to 200 mm and lower than or equal to 630 mm.

In some embodiments, the tube produced comprises a length greater than or equal to 5,0 m and lower than or equal to 20,0 m. In some of these embodiments, the length is greater than or equal to 10,0 m and lower than or equal to 18,0 m. In some of these embodiments, the length is greater than or equal to 12,0 m and lower than or equal to 18,0 m.

In some embodiments, the tube comprises one of the following: an Austenitic Stainless Steel (e.g. UNS S30400, UNS S31600), a Martensitic Stainless Steel (e.g. UNS S41427), an Austeno-ferritic Stainless Steel (e.g. UNS S31803, UNS S32750, UNS S32760), an Austenitic Nickel base Alloy (e.g. UNS N06625, UNS N08825), and a Super-Austenitic Stainless Steel (e.g. UNS N08028).

In some embodiments, the method further comprises heat treating the tube produced; in those embodiments in which the method comprises a step of mechanically forming the mechanical connection ends, preferably the tube is heat treated before that step. In some of these embodiments, the method further comprises heat treating the preform prior to the step of flow forming the preform. In some of these embodiments, heat treating the tube produced comprises subjecting the tube produced to solution annealing.

In some embodiments, the preform comprises an outer diameter greater than or equal to 200 mm and/or 300 mm, preferably greater than or equal to 320 mm, and lower than or equal to 650 mm. In some of these and in other embodiments, the preform comprises a wall thickness greater than or equal to 30,0 mm and lower than or equal to 80,0 mm. In some of these embodiments, the wall thickness of the preform is greater than or equal to 40,0 mm and lower than or equal to 60,0 mm.

In some embodiments, the method further comprises: providing at least four cooling ducts, each cooling duct being adjacent to a roller of the four rollers, preferably to a different roller of the four rollers; and ejecting coolant fluid on the preform. In these embodiments, the step of ejecting the coolant fluid on the preform is carried out simultaneously with the step of flow forming the preform with the four rollers.

In some embodiments, the method further comprises providing a cooling circuit inside the mandrel.

In some embodiments, each of the four rollers is arranged such that a rotation axis thereof is parallel to the rotation axis of the mandrel. In some other embodiments, each of the four rollers is arranged such that there is an angle between a rotation axis of the rollers and the rotation axis of the mandrel.

In some embodiments, the method further comprises sensing pressure radially exerted on the preform by each roller of the four rollers; and adjusting, for at least one roller of the four rollers during the step of flow forming the preform, a position of the roller relative to the other rollers in the axial direction of the mandrel and/or a position of the roller relative to the preform in the radial direction of the mandrel, the adjustment being made with a controlling device and based on the sensed pressures radially exerted on the preform. In some of these embodiments, the at least one roller for which the position is adjusted comprises one or some rollers of any one of the second, the third and the fourth rollers. In these embodiments, the adjustment is preferably made such that a sum of pressures radially exerted on the preform and a sum of moments of force on the preform are both minimized. Also, in these embodiments, the at least one roller of the four rollers whose position is adjusted is one of the second, third and four rollers.

A sixth aspect of the invention relates to a machine for flow forming a preform into a tube, the machine comprising: a mandrel; four rollers adapted to flow form the preform when it is provided in the mandrel; a first roller of the four rollers has a first leading angle A, a second roller of the four rollers has a second leading angle B, a third roller of the four rollers has a third leading angle C, and a fourth roller of the four rollers has a fourth leading angle D, with A < B < C < D; each roller is adapted to be spaced apart from remaining rollers in an axial direction of the mandrel, and the four rollers are adapted to contact the preform in the mandrel with increasing leading angles; and the first roller is diametrically opposed to the second roller in a radial direction of the mandrel, and the third roller is diametrically opposed to the fourth roller in the radial direction of the mandrel.

In some embodiments, the third roller is after the first roller and before the second roller in a rotation direction of the mandrel when viewed in the axial direction of the mandrel.

In some embodiments, the four rollers are offset with 90º angles. In some cases, the offset angles are between 85º and 95º.

In some embodiments, the first leading angle A is greater than or equal to 1º and lower than or equal to 8º, the second leading angle B is lower than or equal to 15º, the third leading angle C is lower than or equal to 20º, and the fourth leading angle D is lower than or equal to 25º. In some of these embodiments, the first leading angle A is greater than or equal to 2º. In some of these embodiments, the first leading angle A is lower than or equal to 6º. In some of these embodiments, the second leading angle B is greater than or equal to 6º. In some of these embodiments, the third leading angle C is greater than or equal to 8º. In some of these embodiments, the fourth leading angle D is greater than or equal to 12º.

In some embodiments, the first roller is arranged spaced apart from the fourth roller, in the axial direction of the mandrel, by a distance, the distance being lower than or equal to 120 mm. In some of these embodiments, the distance is lower than or equal to 80 mm.

The distance between the first roller and the fourth roller in the axial direction of the mandrel is greater than 0 mm. In some embodiments, the distance is greater than 20 mm, and/or greater than 40 mm, and/or greater than 60 mm, and/or greater than 80 mm.

In some embodiments, a first pair of rollers adjacent in the axial direction of the mandrel are arranged spaced apart by a first distance d₁, and a second pair of rollers adjacent in the axial direction of the mandrel are arranged spaced apart by a second distance d₂. In some of these embodiments, a third pair of rollers adjacent in the axial direction of the mandrel are arranged spaced apart by a third distance d₃.

In some embodiments, the machine is configured to flow form the preform with the four rollers a single time.

In some embodiments, the machine is configured to flow form the preform with the four rollers two times.

In some embodiments, the machine is configured to flow form the preform with the four rollers so as to at least reduce thickness of walls of the preform by 20% in one pass. In some of these embodiments, the machine is further configured to flow form the preform with the four rollers so as to at least reduce thickness of walls of the preform by 40%, and/or by 50% in one pass. In some of these embodiments, the machine is configured to flow form the preform with the four rollers so as to at least reduce thickness of walls of the preform by between 70% and 80% in one pass.

In some embodiments, the machine further comprises four cooling ducts, each cooling duct being adjacent to a roller of the four rollers, preferably to a different roller of the four rollers; the machine being configured to eject coolant fluid on the preform while the machine flow forms the preform with the four rollers.

In some embodiments, the machine further comprises a cooling circuit inside the mandrel.

In some embodiments, each of the four rollers is arranged such that a rotation axis thereof is parallel to a rotation axis of the mandrel. In some other embodiments, each of the four rollers is arranged such that there is an angle between a rotation axis of the rollers and a rotation axis of the mandrel.

In some embodiments, the machine further comprises a controlling device (e.g. a computing device), a first plurality of sensors configured to measure pressure that each of the four rollers radially applies to the preform (or the pressure that each roller supports due to the pressure radially applied to the preform), and a second plurality of sensors configured to measure a position of each of the four rollers in the axial direction of the mandrel; the controlling device being configured to receive the measurements of both the first plurality of sensors and the second plurality of sensors; the controlling device being further configured to digitally compute position adjustments for at least one of the four rollers that minimizes each of a sum of pressures radially exerted on the preform and a sum of moments of force on the preform.

A plurality of actuators coupled to the rollers are capable of adjusting the position of the rollers, thus upon receiving the position adjustments from the controlling device, the actuators move the rollers. The controlling device preferably digitally computes the position adjustments for the entire duration of the flow forming process.

The controller is configured in such a manner that it cannot adjust the position of one or more rollers in the axial direction of the mandrel such that a pair of rollers would not be spaced apart in this direction, accordingly the controller always determines which positions adjustments have to be made that will keep the rollers spaced apart in the axial direction of the mandrel. The controller may be configured such that any position adjustments that have to be made are applied faster or slower, for example by means of PID control. The controller may also be configured such that the position of the rollers cannot be beyond certain predetermined positions even if the machine is capable of moving the rollers beyond those predetermined positions. The controller may also be configured such that it limits the position adjustments that the controller computes based on one or more geometrical parameters of the manufacturing process, such as a reduction of the wall thickness to be reached in the flow forming process, a diameter of the resulting tube, a diameter of the preform, a wall thickness of the preform, a diameter of the rollers, etc. The controller may also be configured to store in a memory thereof the position adjustments that it has digitally computed during a flow forming process and retrieve the same in posterior flow forming processes so as to digitally compute faster the necessary position adjustments in these posterior processes.

Similar advantages as those described for the fifth aspect of the invention may also be applicable to this aspect of the invention.

A seventh aspect of the invention relates to a seamless tube comprising: an outer diameter greater than or equal to 200 mm and lower than or equal to 630 mm; a wall thickness greater than or equal to 15,0 mm and lower than or equal to 40,0 mm; and one of the following: an Austenitic Stainless Steel (e.g. UNS S30400, UNS S31600), a Martensitic Stainless Steel (e.g. UNS S41427), an Austeno-ferritic Stainless Steel (e.g. UNS S31803, UNS S32750, UNS S32760), an Austenitic Nickel base Alloy (e.g. UNS N06625, UNS N08825), and a Super-Austenitic Stainless Steel (e.g. UNS N08028).

In some embodiments, the outer diameter is greater than or equal to 300 mm, and/or 400 mm, and/or 500 mm. In some of these embodiments, the outer diameter is lower than or equal to 500 mm, and/or 400 mm.

In some embodiments, the wall thickness is lower than or equal to 35,0 mm, and/or 25,0 mm. In some of these embodiments, the wall thickness is greater than or equal to 20,0 mm, and/or 30,0 mm.

In some embodiments, the tube further comprises a length greater than or equal to 5,0 m and lower than or equal to 20,0 m. In some of these embodiments, the length is greater than or equal to 10,0 m. In some of these embodiments, the length is greater than or equal to 12,0 m. In some of these embodiments, the length is lower than or equal to 18,0 m.

In some embodiments, the seamless tube further comprises first one or more portions and second one or more portions, the first one or more portions comprising a first wall thickness and/or a first outer diameter, and the second one or more portions comprising a second wall thickness and/or a second outer diameter. In some of these embodiments, each of the first and second wall thicknesses is greater than or equal to 15,0 mm and lower than or equal to 40,0 mm. In some of these embodiments, each of the first and second outer diameters is greater than or equal to 200 mm and lower than or equal to 630 mm.

An eighth aspect of the invention relates to a seamless tube obtainable with a method according to the fifth aspect of the invention.

A ninth aspect of the invention relates to a method for producing a tube, the method comprising: providing a preform in a mandrel; flow forming the preform with four rollers thereby producing the tube; sensing pressure radially exerted on the preform by each roller of the four rollers; and adjusting, for at least one roller of the four rollers during the step of flow forming the preform, a position of the roller relative to the other rollers in the axial direction of the mandrel and/or a position of the roller relative to the preform in the radial direction of the mandrel, the adjustment being made with a controlling device based on the sensed pressures radially exerted on the preform and such that a sum of the pressures radially exerted on the preform and a sum of moments of force on the preform are both minimized; a first roller of the four rollers has a first leading angle A, a second roller of the four rollers has a second leading angle B, a third roller of the four rollers has a third leading angle C, and a fourth roller of the four rollers has a fourth leading angle D, with A < B < C < D; the four rollers are arranged such that each roller is spaced apart from remaining rollers in an axial direction of the mandrel, and the four rollers are arranged such that they contact the preform in the mandrel with increasing leading angles.

In some embodiments, the at least one roller for which the position is adjusted comprises one or some rollers of any one of the second, the third and the fourth rollers.

In some embodiments, the first roller is diametrically opposed to the second roller in a radial direction of the mandrel, and the third roller is diametrically opposed to the fourth roller in the radial direction of the mandrel.

In some embodiments, the third roller is after the first roller and before the second roller in a rotation direction of the mandrel when viewed in the axial direction of the mandrel.

In some embodiments, the four rollers are offset with 90º angles. In some cases, the offset angles are between 85º and 95º.

In some embodiments, the preform is a seamless preform.

In some embodiments, the method further comprises: forming a recess on a portion of the preform comprising one of two ends of the preform; and bringing into contact each roller of the four rollers with the preform in the portion thereof.

In some embodiments, the method further comprises: forming a recess on a portion of the preform not comprising any one of the two ends of the preform; and bringing into contact each roller of the four rollers with the preform in the portion thereof.

In some embodiments, the portion is at a distance from one end of the preform equal to or greater than any one of the following values: 200 mm, 300 mm, 450 mm, 500 mm, 600 mm and 750 mm; preferably, the distance is equal to or smaller than any one of the following values: 1000 mm, 750 mm, and 600 mm. In some embodiments, the portion is at a distance from one end of the preform equal to or greater than any one of the following values: 1,0%, 2,0%, 5,0%, and 7,5% of a total length of the preform; preferably, the distance is equal to or smaller than any one of the following values: 12,0%, 10,0%, 7,5%, and 5,0%.

In some embodiments, the step of flow forming the preform with the four rollers comprises flow forming the preform with the four rollers such that in one flow forming pass neither one of the two ends of the preform is flow formed, thereby producing the tube; and the method further comprises mechanically forming mechanical connection ends on the two ends of the tube.

In some embodiments, the one flow forming pass is the only flow forming pass that the preform is subjected to, whereas in some other embodiments, the one flow forming pass is subsequent to one or more other flow forming passes in which one, both or none of the ends of the preform is flow formed (so as to lengthen the preform and reduce the wall thickness thereof when the dimensions of the preform are such that allow several flow forming passes to produce the tube), i.e. the one flow forming pass is the last flow forming pass that the preform is subjected to.

In some embodiments, each of the two mechanical connection ends comprises one of: a male thread, a female thread, a male mechanical connector, and a female mechanical connector.

In some embodiments, the first leading angle A is greater than or equal to 1º and lower than or equal to 8º, the second leading angle B is lower than or equal to 15º, the third leading angle C is lower than or equal to 20º, and the fourth leading angle D is lower than or equal to 25º. In some of these embodiments, the first leading angle A is greater than or equal to 2º. In some of these embodiments, the first leading angle A is lower than or equal to 6º. In some of these embodiments, the second leading angle B is greater than or equal to 6º. In some of these embodiments, the third leading angle C is greater than or equal to 8º. In some of these embodiments, the fourth leading angle D is greater than or equal to 12º.

In some embodiments, a distance between the first roller and the fourth roller in the axial direction of the mandrel is lower than or equal to 120 mm. In some of these embodiments, the distance is lower than or equal to 80 mm.

In some embodiments, a first pair of rollers adjacent in the axial direction of the mandrel are spaced apart a first distance d₁, and a second pair of rollers adjacent in the axial direction of the mandrel are spaced apart a second distance d₂. In some of these embodiments, a third pair of rollers adjacent in the axial direction of the mandrel are spaced apart a third distance d₃.

In some embodiments, the step of flow forming the preform with four rollers is carried out a single time.

In some other embodiments, the step of flow forming the preform with four rollers is carried out two times.

In some embodiments, the step of flow forming the preform with four rollers at least reduces thickness of walls of the preform by 20% in one pass. In some of these embodiments, the step of flow forming the preform with four rollers at least reduces thickness of walls of the preform by 40%, and/or by 50% in one pass. In some of these embodiments, the step of flow forming the preform with four rollers reduces thickness of walls of the preform between 70% and 80% in one pass.

In some embodiments, the tube produced comprises an outer diameter greater than or equal to 200 mm and lower than or equal to 630 mm. In some of these embodiments, the outer diameter is greater than or equal to 300 mm, and/or 400 mm, and/or 500 mm. In some of these embodiments, the outer diameter is lower than or equal to 500 mm, and/or 400 mm.

In some embodiments, the tube produced comprises a wall thickness greater than or equal to 15,0 mm and lower than or equal to 40,0 mm. In some of these embodiments, the wall thickness is lower than or equal to 35,0 mm, and/or 25,0 mm. In some of these embodiments, the wall thickness is greater than or equal to 20,0 mm, and/or 30,0 mm.

In some embodiments, the step of flow forming the preform with four rollers comprises flow forming the preform with the four rollers such that the tube produced at least comprises first one or more portions and second one or more portions, the first one or more portions comprising a first wall thickness and/or a first outer diameter, and the second one or more portions comprising a second wall thickness and/or a second outer diameter. In some of these embodiments, each of the first and second wall thicknesses is greater than or equal to 15,0 mm and lower than or equal to 40,0 mm. In some of these embodiments, each of the first and second outer diameters is greater than or equal to 200 mm and lower than or equal to 630 mm.

In some embodiments, the tube produced comprises a length greater than or equal to 5,0 m and lower than or equal to 20,0 m. In some of these embodiments, the length is greater than or equal to 10,0 m and lower than or equal to 18,0 m. In some of these embodiments, the length is greater than or equal to 12,0 m and lower than or equal to 18,0 m.

In some embodiments, the tube comprises one of the following: an Austenitic Stainless Steel (e.g. UNS S30400, UNS S31600), a Martensitic Stainless Steel (e.g. UNS S41427), an Austeno-ferritic Stainless Steel (e.g. UNS S31803, UNS S32750, UNS S32760), an Austenitic Nickel base Alloy (e.g. UNS N06625, UNS N08825), and a Super-Austenitic Stainless Steel (e.g. UNS N08028).

In some embodiments, the method further comprises heat treating the tube produced; in those embodiments in which the method comprises a step of mechanically forming the mechanical connection ends, preferably the tube is heat treated before that step. In some of these embodiments, heat treating the tube produced comprises subjecting the tube produced to solution annealing. In some of these embodiments, the method further comprises heat treating the preform prior to the step of flow forming the preform.

In some embodiments, the preform comprises an outer diameter greater than or equal to 200 mm, preferably greater than or equal to 320 mm, and lower than or equal to 650 mm. In some of these and in other embodiments, the preform comprises a wall thickness greater than or equal to 30,0 mm and lower than or equal to 80,0 mm. In some of these embodiments, the wall thickness of the preform is greater than or equal to 40,0 mm and lower than or equal to 60,0 mm.

In some embodiments, the method further comprises: providing at least four cooling ducts, each cooling duct being adjacent to a roller of the four rollers, preferably to a different roller of the four rollers; and ejecting coolant fluid on the preform. In these embodiments, the step of ejecting the coolant fluid on the preform is carried out simultaneously with the step of flow forming the preform with the four rollers.

In some embodiments, the method further comprises providing a cooling circuit inside the mandrel.

In some embodiments, each of the four rollers is arranged such that a rotation axis thereof is parallel to the rotation axis of the mandrel. In some other embodiments, each of the four rollers is arranged such that there is an angle between a rotation axis of the rollers and the rotation axis of the mandrel.

A tenth aspect of the invention relates to a machine for flow forming a preform into a tube, the machine comprising: a mandrel; four rollers adapted to flow form the preform when it is provided in the mandrel; a first plurality of sensors configured to measure pressure radially exerted on the preform by each roller of the four rollers; a second plurality of sensors configured to measure a position of each of the four rollers in an axial direction of the mandrel; a controller configured to digitally compute, for at least one roller of the four rollers, a position of the roller relative to the other rollers in the axial direction of the mandrel and/or a position of the roller relative to the preform in the radial direction of the mandrel, the position or positions being computed based on the measured pressures radially exerted on the preform and such that a sum of the pressures radially exerted on the preform and a sum of moments of force on the preform are both minimized; and a plurality of actuators configured to adjust the position of each roller of the four rollers; a first roller of the four rollers has a first leading angle A, a second roller of the four rollers has a second leading angle B, a third roller of the four rollers has a third leading angle C, and a fourth roller of the four rollers has a fourth leading angle D, with A < B < C < D; each roller is adapted to be spaced apart from remaining rollers in the axial direction of the mandrel, and the four rollers are adapted to contact the preform in the mandrel with increasing leading angles.

In some embodiments, the at least one roller for which the position is adjusted comprises one or some rollers of any one of the second, the third and the fourth rollers.

In some embodiments, the first roller is diametrically opposed to the second roller in a radial direction of the mandrel, and the third roller is diametrically opposed to the fourth roller in the radial direction of the mandrel. In some of these embodiments, the third roller is after the first roller and before the second roller in a rotation direction of the mandrel when viewed in the axial direction of the mandrel.

In some embodiments, the four rollers are offset with 90º angles. In some cases, the offset angles are between 85º and 95º.

In some embodiments, the first leading angle A is greater than or equal to 1º and lower than or equal to 8º, the second leading angle B is lower than or equal to 15º, the third leading angle C is lower than or equal to 20º, and the fourth leading angle D is lower than or equal to 25º. In some of these embodiments, the first leading angle A is greater than or equal to 2º. In some of these embodiments, the first leading angle A is lower than or equal to 6º. In some of these embodiments, the second leading angle B is greater than or equal to 6º. In some of these embodiments, the third leading angle C is greater than or equal to 8º. In some of these embodiments, the fourth leading angle D is greater than or equal to 12º.

In some embodiments, the first roller is arranged spaced apart from the fourth roller, in the axial direction of the mandrel, by a distance, the distance being lower than or equal to 120 mm. In some of these embodiments, the distance is lower than or equal to 80 mm.

The distance between the first roller and the fourth roller in the axial direction of the mandrel is greater than 0 mm. In some embodiments, the distance is greater than 20 mm, and/or greater than 40 mm, and/or greater than 60 mm, and/or greater than 80 mm.

In some embodiments, a first pair of rollers adjacent in the axial direction of the mandrel are arranged spaced apart by a first distance d₁, and a second pair of rollers adjacent in the axial direction of the mandrel are arranged spaced apart by a second distance d₂. In some of these embodiments, a third pair of rollers adjacent in the axial direction of the mandrel are arranged spaced apart by a third distance d₃.

In some embodiments, the machine is configured to flow form the preform with the four rollers a single time.

In some embodiments, the machine is configured to flow form the preform with the four rollers two times.

In some embodiments, the machine is configured to flow form the preform with the four rollers so as to at least reduce thickness of walls of the preform by 20% in one pass. In some of these embodiments, the machine is further configured to flow form the preform with the four rollers so as to at least reduce thickness of walls of the preform by 40%, and/or by 50% in one pass. In some of these embodiments, the machine is configured to flow form the preform with the four rollers so as to at least reduce thickness of walls of the preform by between 70% and 80% in one pass.

In some embodiments, the machine further comprises four cooling ducts, each cooling duct being adjacent to a roller of the four rollers, preferably to a different roller of the four rollers; the machine being configured to eject coolant fluid on the preform while the machine flow forms the preform with the four rollers.

In some embodiments, the machine further comprises a cooling circuit inside the mandrel.

In some embodiments, each of the four rollers is arranged such that a rotation axis thereof is parallel to a rotation axis of the mandrel. In some other embodiments, each of the four rollers is arranged such that there is an angle between a rotation axis of the rollers and a rotation axis of the mandrel.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figures 1A-1E, 2A-2G, 3A-3F and 4A-4I diagrammatically illustrate the production of tubes with methods in accordance with embodiments.
Figures 5A-5B shows an exemplary flow forming machine of the prior art.
Figure 6 shows leading and trailing edges of a roller for flow forming.
Figure 7 diagrammatically shows an arrangement of rollers of a machine in accordance with an embodiment.
Figures 8A-8B shows an arrangement of rollers of a machine in accordance with an embodiment.
Figure 9 shows an arrangement of rollers in accordance with an embodiment.

### DESCRIPTION OF WAYS OF CARRYING OUT THE INVENTION

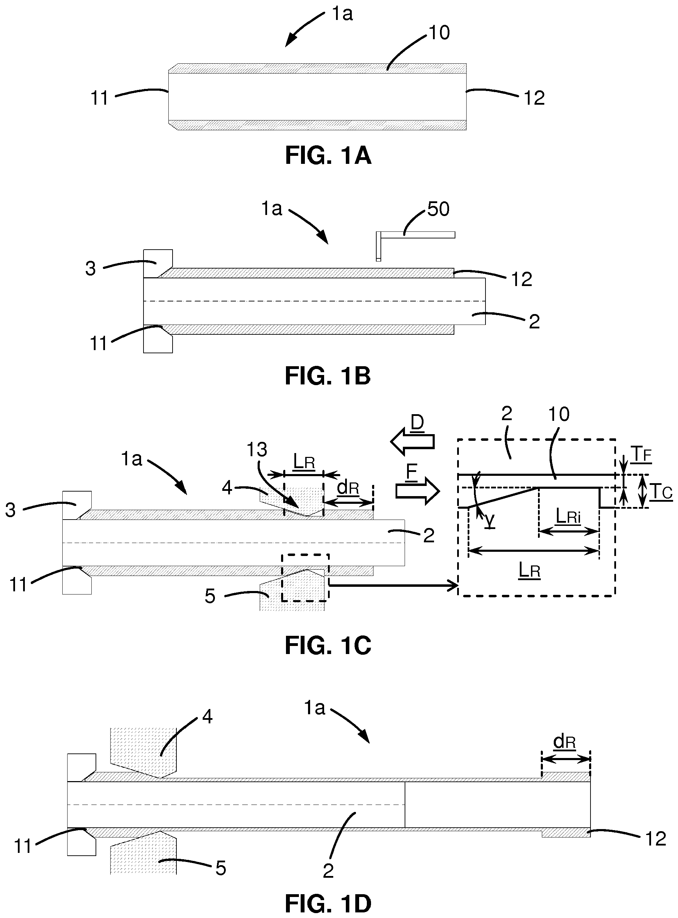

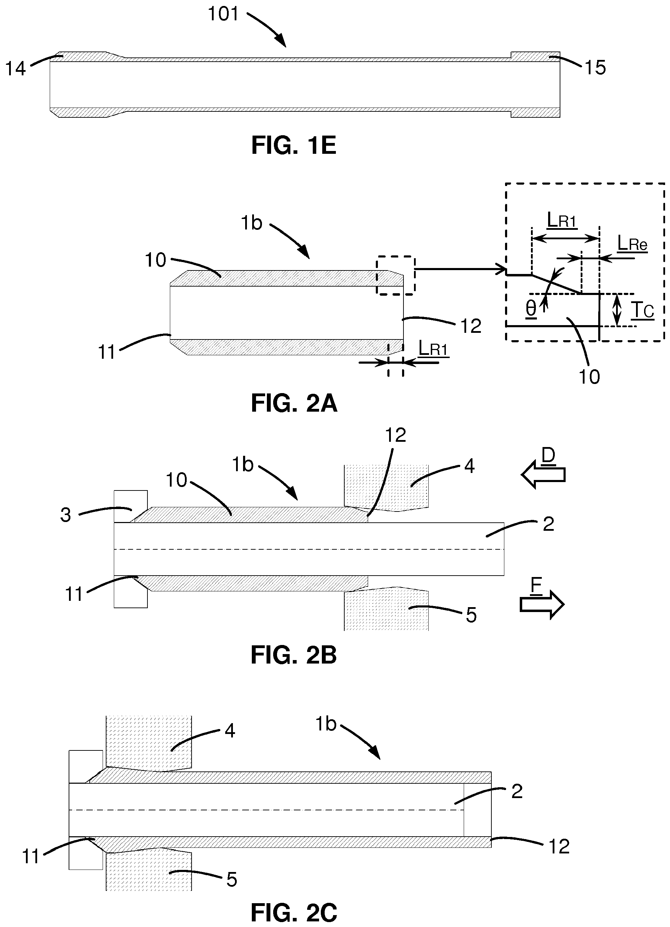

Figures 1A-1E diagrammatically illustrate the production of a tube 101 with a method in accordance with an embodiment. With reference to these Figures 1A-1E, and also to Figures 2A-2G, 3A-3F and 4A-4I, only for the sake of clarity these figures represent the flow forming process from a cross-section view corresponding to a vertical plane going through a rotation axis of a mandrel 2, therefore only two rollers are illustrated but it is readily apparent that the plurality of rollers comprises three, four or even more rollers. Further, the rollers are arranged as described in the present disclosure, that is, with increasing leading angles in the axial direction of the mandrel thereby contacting the preform with increasing leading angles, and with separations between the rollers in the axial direction of the mandrel.

Figure 1A shows a preform 1a before being subjected to a flow forming process for producing the tube 101 shown in Figure 1E. The preform 1a may have been subjected to several thermal and mechanical processes before being subjected to the process steps that are described with reference to Figures 1B-1D. The preform 1a has a preliminary length, that is the length before flow forming the preform 1a, and comprises a preform surface 10, a first end 11, and a second end 12 opposite to the first end 11.

Figure 1B shows the preform 1a secured to the mandrel 2 and clamped to the support 3 of a flow forming machine by its first end 11. A tool 50, for instance a machining tool, forms a recess 13 (illustrated in Figure 1C) on the preform surface 10. The recess 13 (which is shown in a magnified view at the right side part of Figure 1C and in which the bottom roller 5 has not been illustrated for the sake of clarity) has a length L_{R} (in the axial direction of the mandrel 2 and the preform 1a), does not reach any one of the first and second ends 11, 12 of the preform 1a, and the recess 13 is formed at a distance d_{R} away from the second end 12. By not forming the recess 13 in the portion (with length d_{R}) that comprises the second end 12, a mechanical connection end (e.g. a threaded connection, a mechanical connector) for connecting the resulting tube to another tube may be integrally formed in said portion. Preferably the length L_{R} of the recess 13 is such that all the rollers of the plurality of rollers can be introduced therein when they are brought into contact with the preform 1a, therefore the length L_{R} is greater than a distance (in the axial direction of the mandrel 2) between a first roller (i.e. a forward-most roller in the main direction D) and a last roller (i.e. a rear-most roller in the main direction D) of the plurality of rollers, more preferably is equal to or greater than said distance plus one time a length equal to the thickness of the rollers so that all the rollers completely fit within the recess 13.

In this particular example, the recess 13 is formed such that first and second portions are provided. The first portion has a length L_{Ri} that is preferably at least as long as the thickness of the rollers 4, 5; also, the first portion of the recess 13 has a thickness T_{F} of the preform 1a that is equal to or approximately equal to the wall thickness of the tube to be produced, this is so because one flow forming pass will be made in order to produce the resulting tube, thus the flow forming will start at the first portion of the recess 13 and will reduce the wall thickness of the preform 1a to the thickness T_{F}. The second portion of the recess 13 has a length equal to L_{R} minus L_{Ri}, and preferably has a shape such that the wall thickness therein progressively reduces (with an angle gamma γ that has a value preferably selected from the range of 8º up to 30º, both endpoints being included) until it arrives to the first portion and has the thickness T_{F}. The remaining part of the preform 1a has the wall thickness Tc, including the portion corresponding to d_{R} where a mechanical connection end will be formed.

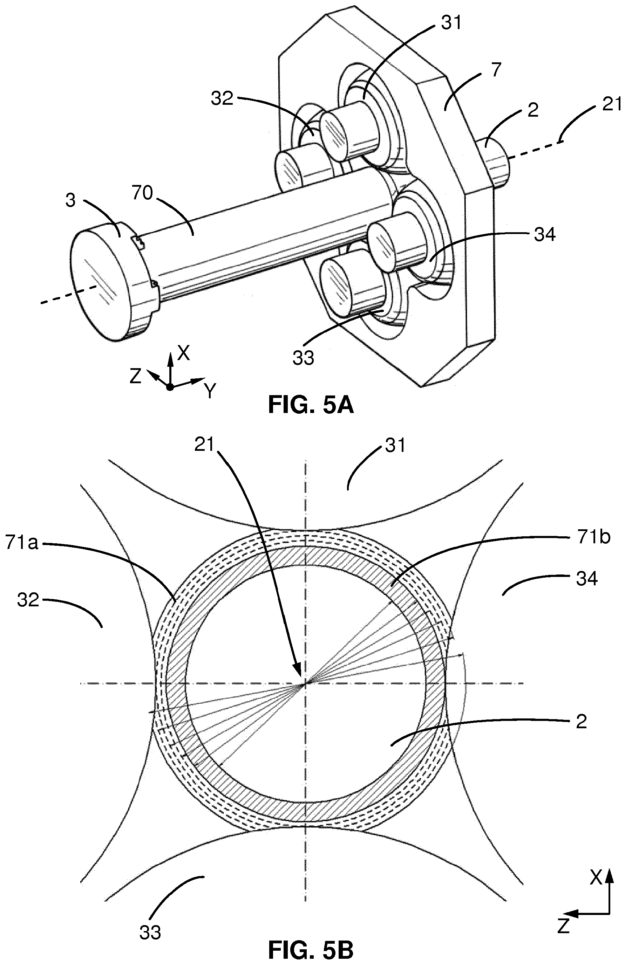

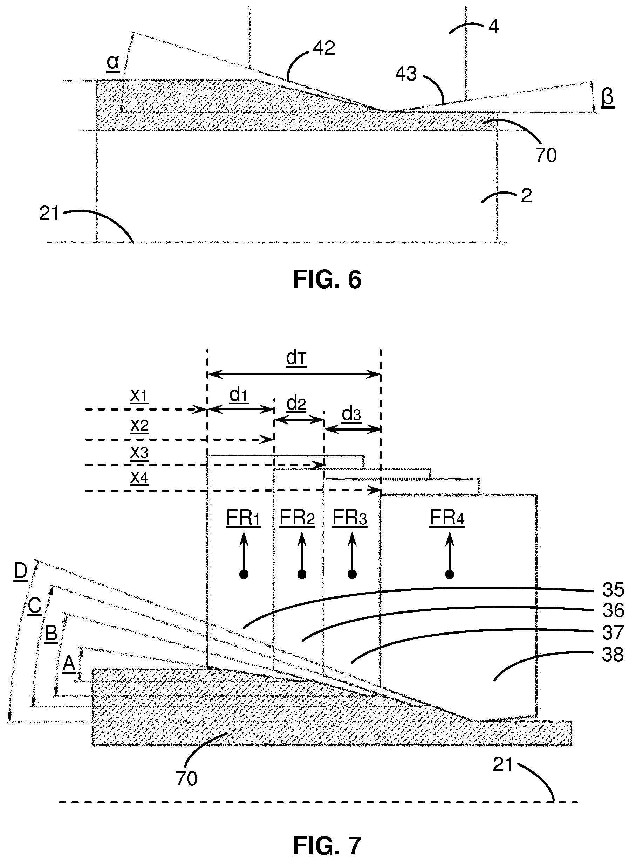

Figure 1C shows the preform 1a when the plurality of rollers 4-5 (only two rollers being illustrated as aforementioned) are brought into contact with the preform 1a in the recess 13. The top-most roller 4 may correspond to a first roller 31 of the machine of Figures 5A-5B or to a first roller 35 of the machine of Figures 7, 8A-8B and 9, and the bottom-most roller 5 may correspond to a second roller 32 of the machine of Figures 5A-5B or to a second roller 36 of the machine of Figures 7, 8A-8B and 9. Additional rollers not illustrated may be further staggered to the right of each of the top-most roller 4 and the bottom-most roller 5 and may correspond to one or both of third and fourth rollers 33-34 of the machine of Figures 5A-5B or to one or both of third and fourth rollers 37-38 of the machine of Figures 7, 8A-8B and 9. As described above, the recess 13 has the first and second portions, and the last roller (i.e. the one that is to be at the right-most part of the Figure 1C and which is closer to the mandrel 2 in the radial direction) is to be brought into contact with the preform 1a in the first portion of the recess 13, thus as the length LRi is at least greater than the thickness of the rollers, said last roller fits in the first portion. The further rollers, including for instance the illustrated rollers 4, 5, are staggered to the left with respect to the last roller and are brought into contact with the preform 1a in the second portion of the recess 13, therefore the inclined shape of the second portion makes possible to better adapt to the increasing distance between the mandrel and the rollers 4, 5 in the radial direction. Owing to said recess 13, the flow forming pass may start with the rollers already contacting the preform 1a at portions thereof having different wall thicknesses, thereby making smoother the start of the flow forming pass. In some other embodiments, the recess 13 is formed with a single portion in which the wall thickness of the preform is T_{F}, or in which the wall thickness of the preform has the progressive reduction explained with reference to the second portion of the recess 13, in these embodiments, however, the start of the flow forming pass is less smooth than in preforms having the recess 13 with the first and second portions shown in Figure 1C because the wall thickness of the preform 1a is not adapted to the different distances between the rollers and the mandrel 2 in the radial direction.

The rollers 4-5 are displaced with respect to the mandrel 2 and the preform 1a in a main direction D, so that the preform 1a flows along a flow direction F which is opposite to the main direction D. The rollers 4-5 cause the metal to flow because they compress it and it is forced to flow in a direction opposite to the main direction D due to the clamping of the preform 1a to a support 3. During the flow forming process, the length of the preform 1a is increased, since no material is chipped, but is made to flow from the wall thickness of the preform 1a to the final length.

Figure 1D shows the preform 1a at the end of the flow forming pass, when the rollers 4-5 have arrived near the first end 11. In this case, a portion of the preform 1a near the first end 11 is also left without flow forming and, thus, has the wall thickness T_{C} (as shown in the magnified view of Figure 1C). By not flow forming the portion comprising the first end 11, a mechanical connection end (e.g. a threaded connection, a mechanical connector) for connecting the resulting tube to another tube may be integrally formed in said portion.

Figure 1E shows the tube 101 produced, which is longer than the original preform 1a and has first and second end portions 14, 15 with a wall thickness (i.e. thickness T_{C}) greater than that of the rest of the tube 101 (i.e. thickness T_{F}). In some embodiments, mechanical connection ends are then formed on the first and second end portions 14, 15 by means of a mechanical process, for example machining or grinding.

Figures 2A-2G diagrammatically illustrate the production of a tube 102 with a method in accordance with an embodiment.

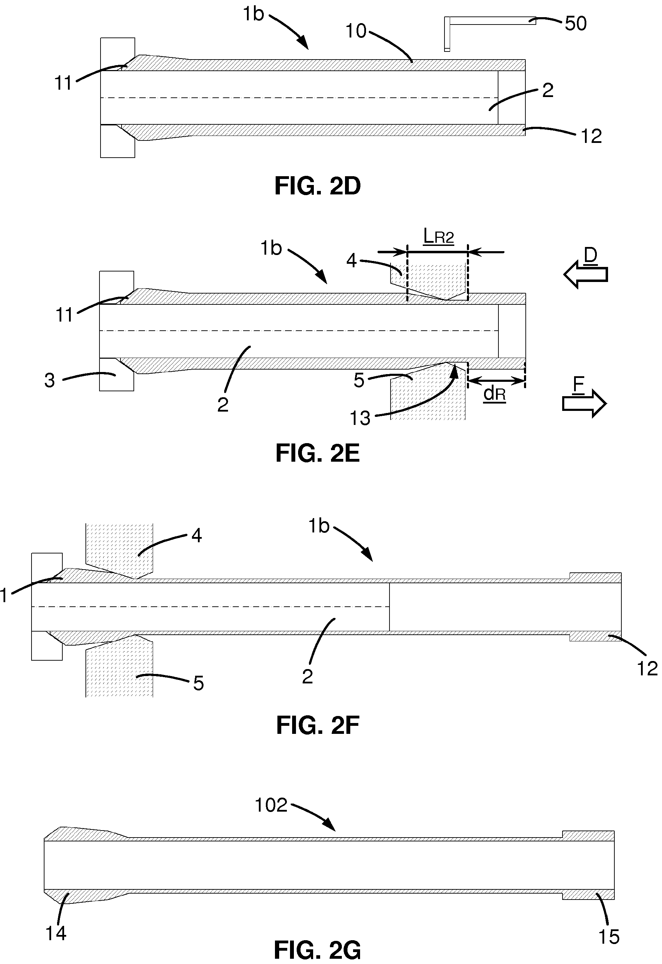

Figure 2A shows the preform 1b before being subjected to a flow forming process for producing the tube 102 shown in Figure 2G. The preform 1b may have been subjected to several thermal and mechanical processes before being subjected to the process steps that are described with reference to Figures 2B-2F. The preform 1b has a preliminary length, and comprises a preform surface 10, a first end 11, and a second end 12 opposite to the first end 11. On the surface of the second end 12 of the preform 1b a recess has been formed (a magnified view thereof is shown at the right side part of the figure for the sake of clarity) so that the plurality of rollers may be brought into contact with the preform 1b and have the amounts of pressure radially exerted on the preform 1b by the rollers and, therefore, the amounts of pressure supported by each of the rollers substantially balanced from the start of the flow forming process, which results in a smoother start of the flow forming process.

A length L_{R1} of the recess at the second end 12 is such that some or all the rollers of the plurality of rollers can be introduced therein when they are brought into contact with the preform 1b. In this sense, the length L_{R1} is greater than a distance (in the axial direction of the mandrel 2) between a first roller (i.e. a forward-most roller in the main direction D) and a last roller (i.e. a rear-most roller in the main direction D) of the plurality of rollers, and is more preferably at least equal to or greater than said distance plus a length equal to 0,5 or one time the thickness of the rollers so that all the rollers completely or almost completely fit within the recess.

Preferably, the recess is formed such that first and second portions are provided. The first portion has a length L_{Re} that is preferably at least as long as 0,5 times or even one time the thickness of the rollers 4, 5; also, the first portion of the recess 13 has a thickness Tc of the preform 1b that is equal to or approximately equal to the wall thickness of the preform prior to a subsequent flow forming pass as will be described next with reference to Figures 2B-2G, thus the flow forming will start at the first portion of the recess and will reduce the wall thickness of the preform 1b to the thickness T_{C}. The second portion of the recess has a length equal to L_{R1} minus L_{Re}, and preferably has a shape such that the wall thickness therein progressively reduces (with an angle theta θ that has a value preferably selected from the range of 8º up to 30º, both endpoints being included) until it arrives to the first portion and has the thickness T_{C}.

Figure 2B shows the preform 1b secured to the mandrel 2 and clamped by its first end 11 to a support 3 of a flow forming machine. The plurality of rollers 4-5 is brought into contact with the second end 12 of the preform 1b. In order to have a smooth start of the flow forming pass, the forward-most rollers (i.e. the rollers that would be at the left-most part in the figure) contact the preform 1b at the second portion of the recess such that the inclined shape allows to adapt to the different radial distances between the rollers 4, 5 and the mandrel 2, whereas the rear-most roller (i.e. the roller that would be at the right-most part in the figure) partially or completely fits in the first portion of the recess, thereby contacting the preform 1b where the wall thickness is Tc. In some other embodiments, the recess is formed with a single portion in which the wall thickness of the preform is T_{C}, or in which the wall thickness of the preform has the progressive reduction explained with reference to the second portion of the recess.

The rollers 4-5 are displaced with respect to the mandrel 2 and the preform 1b in a main direction D, so that the preform 1b flows along a flow direction F which is opposite to the main direction D. The rollers 4-5 cause the metal to flow because they compress the preform 1b and hence the metal is forced to flow in a flow direction F opposite to the main direction D because the preform 1b is clamped by its first end 11 to the support 3.

Figure 2C shows the preform 1b at the end of the first pass, when the rollers 4-5 have arrived near the first end 11. In this case, a portion of the preform 1b near the first end 11 is left without flow forming, thereby making possible to integrally form in said portion a mechanical connection end (e.g. a threaded connection, a mechanical connector) for connecting the resulting tube to another tube.

Figure 2D shows a tool 50 for forming a recess on the surface 10 (after the first flow forming pass), thereby providing a recess 13 therein. The recess 13 has a length L_{R2}, does not reach any one of the first and second ends 11, 12 of the preform 1b, and the recess 13 is formed at a distance d_{R} away from the second end 12. By not forming the recess 13 in the portion (with length d_{R}) that comprises the second end 12, a mechanical connection end (e.g. a threaded connection, a mechanical connector) for connecting the resulting tube to another tube may be integrally formed in said portion. Preferably the length L_{R2} of the recess 13 is such that all the rollers of the plurality of rollers can be introduced therein when they are brought into contact with the preform 1b (after the first flow forming pass). Albeit not illustrated with a magnified view, the same explanation given above with reference to the recess 13 of the embodiment of Figures 1A-1E also applies to this recess 13.

Figure 2E shows the preform 1 b when the plurality of rollers 4-5 are brought into contact with the same 1b in the recess 13. The rollers 4-5 are displaced with respect to the mandrel 2 and the preform 1b in the main direction D, so that the preform flows along the flow direction F. During this flow forming process, the length of the preform 1b is further increased.

Figure 2F shows the preform 1b at the end of the second pass, when the rollers 4-5 have arrived near the first end 11. Again, the portion of the preform 1b near the first end 11 is left without flow forming so that a mechanical connection may be formed therein.

Figure 2G shows the tube 102 produced, which is longer than the original preform 1b and has first and second end portions 14, 15 with a wall thickness greater than that of the rest of the tube 102. In some embodiments, mechanical connection ends are then formed on the first and second end portions 14, 15 by means of a mechanical process, for example machining or grinding.

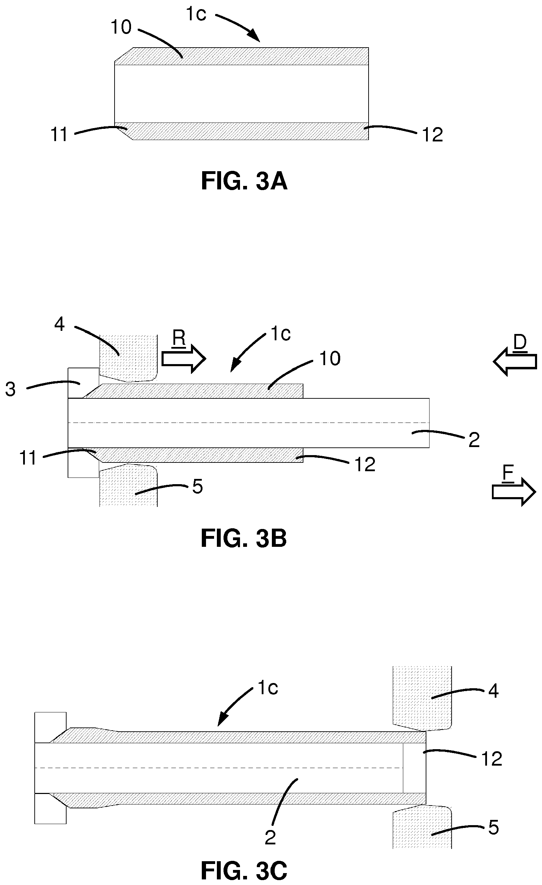

Figures 3A-3F diagrammatically illustrate the production of a tube 103 with a method in accordance with an embodiment.

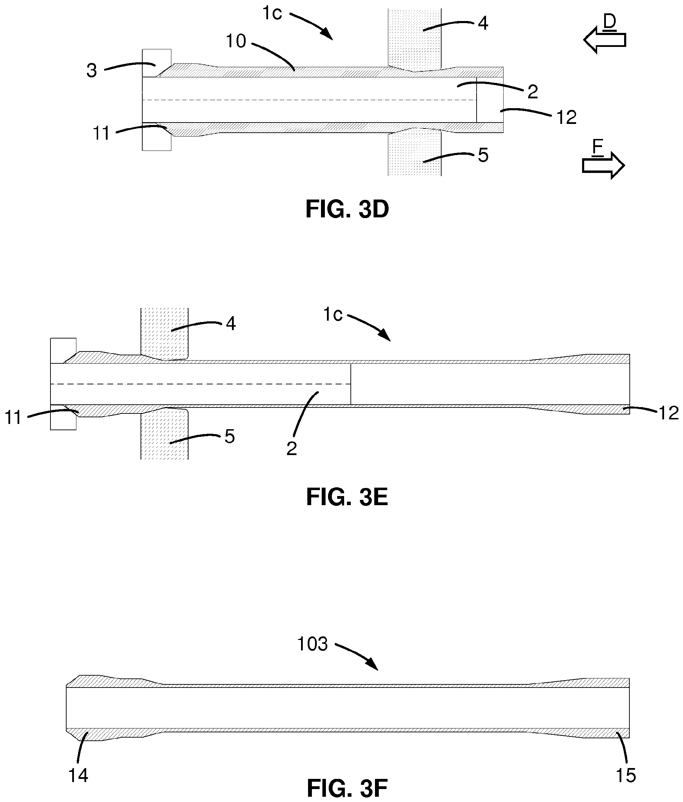

Figure 3A shows the preform 1c before being subjected to a flow forming process for producing the tube 103 shown in Figure 3F. The preform 1c may have been subjected to several thermal and mechanical processes before being subjected to the process steps that are described with reference to Figures 3B-3E. The preform 1c has a preliminary length, and comprises a preform surface 10, a first end 11, and a second end 12 opposite to the first end 11.

Figure 3B shows the preform 1c secured to the mandrel 2 and clamped by its first end 11 to a support 3 of a flow forming machine. A plurality of rollers 4-5 are brought into contact with the preform surface 10, at a position (in the axial direction of the mandrel 2 and the preform 1c) which is at least 1% of the preliminary length away from the first end 11. The rollers 4-5 are displaced with respect to the mandrel 2 and the preform 1c in a direct direction R, which is opposite to the main direction D as described in the methods illustrated by Figures 1A-1E and 2A-2G. In this case, the preform 1c flows along a flow direction F which is the same as the direct direction R. The rollers 4-5 cause the metal to flow because they compress the preform 1c and hence the metal is forced to flow in this direct direction R and the flow direction F due to the clamping of the preform 1c to the support 3.

Figure 3C shows the preform 1c at the end of the first pass, when the rollers 4-5 have arrived at the second end 12.

Figure 3D shows the preform 1c when the rollers 4-5 are brought into contact with the preform surface 10, at a position (in the axial direction of the mandrel 2 and the preform 1c) which is at least 1% of the preform length away from the second end 12. It is to be noted that the preform length is greater than the preliminary length, since it has been increased in the step illustrated by Figure 3B. This step may be performed quickly, since the rollers 4-5 are already located near the second end 12, because the previous step finished there. The rollers 4-5 are displaced with respect to the mandrel 2 and the preform 1c in the main direction D, yet the preform 1c flows along the flow direction F.

Figure 3E shows the preform 1c at the end of the second pass, when the rollers 4-5 have arrived near the first end 11. In this embodiment, portions of the preform 1c near the first and the second ends 11, 12 are left without flow forming and, thus, have a greater wall thickness than the flow formed portion of the preform 1c.

Figure 3F shows the tube 103 produced. In some embodiments, mechanical connection ends are then formed on first and second end portions 14, 15 of the tube 103 by means of a mechanical process, for example machining or grinding.

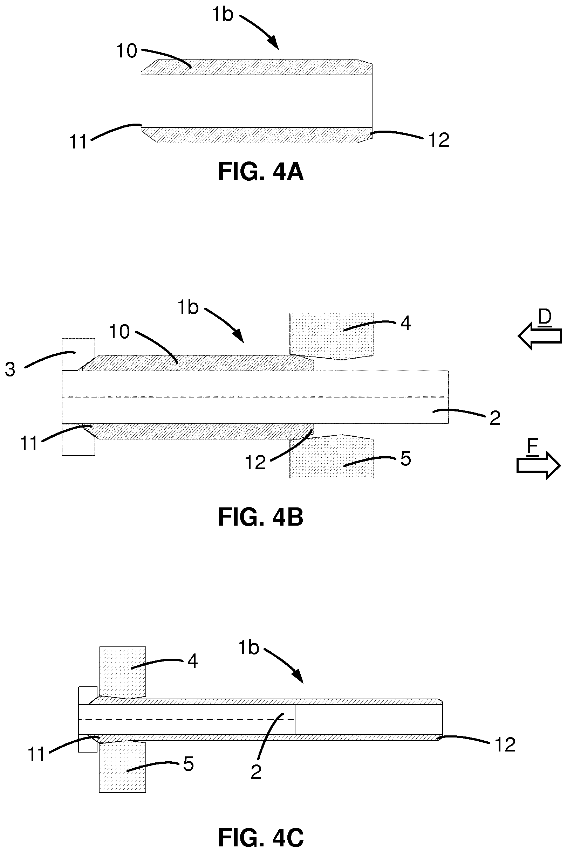

Figures 4A-4I diagrammatically illustrate the production of a tube 104 with a method in accordance with an embodiment.

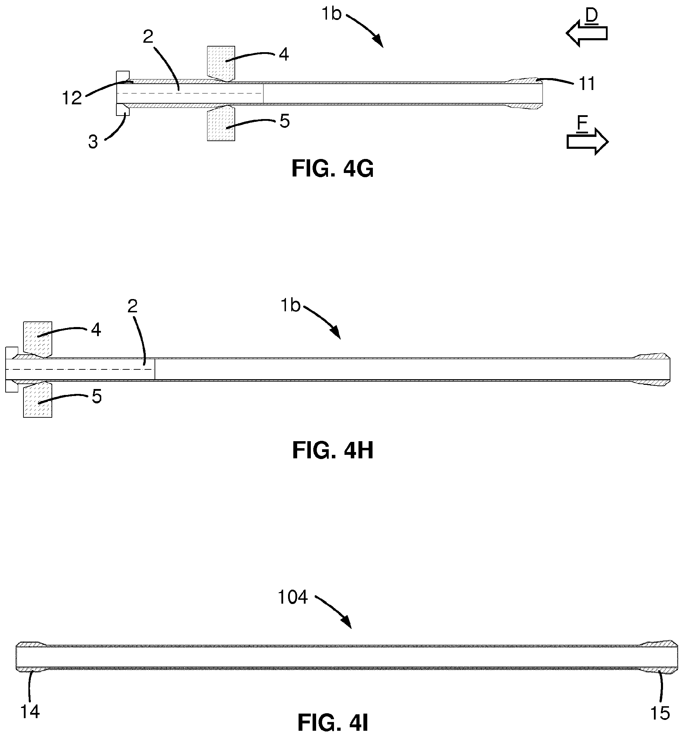

Figure 4A shows the same preform 1b of Figures 2A-2G before being subjected to a flow forming process for producing the tube 104 shown in Figure 4I. This preform 1b may have been subjected to several thermal and mechanical processes before being subjected to the process steps that are described with reference to Figures 4B-4H. A recess has been formed at the second end 12 of the preform 1b for a smoother start of the flow forming process by the plurality of rollers 4-5.

Figure 4B shows the preform 1b secured to the mandrel 2 and clamped by its first end 11 to the support 3 of a flow forming machine. The plurality of rollers 4-5 are brought into contact with the preform 1b in the recess at the second end 12 of the preform 1b. The rollers 4-5 are displaced with respect to the mandrel 2 and the preform 1b in a main direction D, so that the preform 1b flows along a flow direction F that is opposite to the main direction D.

Figure 4C shows the preform 1b at the end of the first pass, when the rollers 4-5 have arrived near the first end 11, but without reaching it. Accordingly, a portion of the preform 1b comprising the first end 11 is left without flow forming.

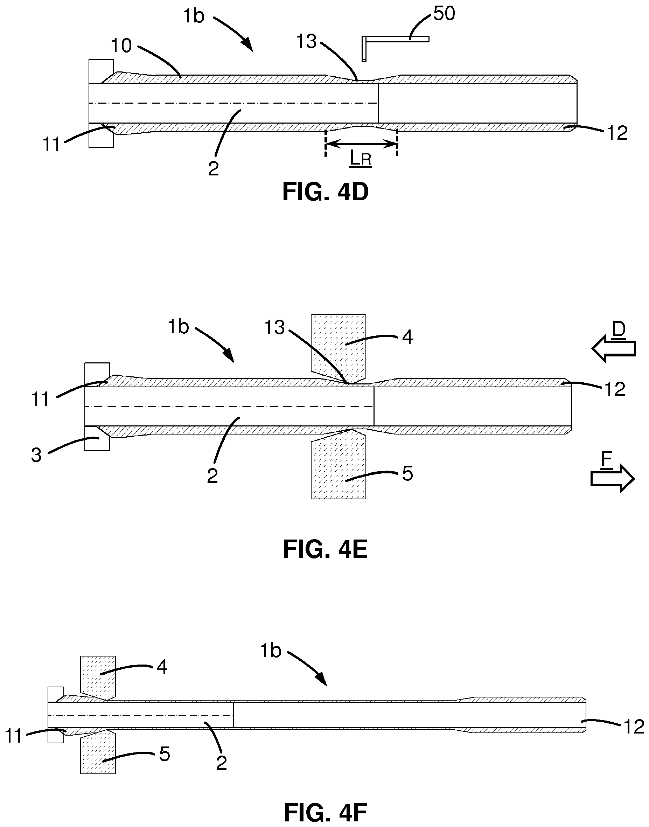

Figure 4D shows a tool 50 for forming a recess on the surface 10 (after the first flow forming pass), thereby providing a recess 13 therein. The recess 13 is at a position of the preform 1b (after the first flow forming pass) that is between 40% and 60% (the endpoints being included in the range) of the preform length (the length after the first flow forming pass) away from the second end 12. It is to be noted that the preform length is greater than the preliminary length, since it has been increased in the step illustrated by Figure 4B. As explained with reference to the recesses 13 of the embodiments of Figures 1A-1E and 2A-2G, the recess 13 has a length L_{R} that is preferably equal to or greater than a distance (in the axial direction of the mandrel 2) between a first roller (i.e. a forward-most roller in the main direction D) and a last roller (i.e. a rear-most roller in the main direction D) of the plurality of rollers 4-5, and preferably has said first and second portions.

Figure 4E shows the preform 1b when the rollers 4-5 are brought into contact with the same 1b in the recess 13. The rollers 4-5 are displaced with respect to the mandrel 2 and the preform 1b in the main direction D, the preform 1b thereby flowing along the flow direction F. This pass has been performed along approximately half of the length of the preform 1b, but there is still another portion of the preform 1b that has not undergone the second pass.

Figure 4F shows the preform 1b at the end of the second pass, when the rollers 4-5 have arrived near the first end 11. In this case, the portion of the preform 1b near the first end 11 is left without flow forming; if the resulting tube shall have a mechanical connection integrally formed on the first end 11, such mechanical connection may be provided thanks to the greater wall thickness in this portion.

Figure 4G shows the preform 1b, which has been unclamped from the support 3 and clamped again but by the second end 12 of the preform 1b. The portion of the preform 1b that has not undergone the second pass is now arranged onto the mandrel 2 so that the second pass may be performed on this portion. The rollers 4-5 are displaced with respect to the mandrel 2 and the preform 1b in the main direction D, so that the preform 1b flows along the flow direction F. This pass has been performed along the portion of the preform that was not subjected to this second pass.

Figure 4H shows this preform 1b when the whole preform, except the portions that comprise the ends, have undergone the flow forming process.

Figure 4I shows the tube produced 104. In some embodiments, mechanical connection ends are then formed on first and second end portions 14, 15 of the tube 104 by means of a mechanical process, for example machining or grinding

The method corresponding to figures 4A-4I makes possible to manufacture a tube with a length that may be two or three times the length of the mandrel 2. The length of the mandrel 2 is limited because of technical and structural requirements, but longer tubes are advantageous as they may form a pipe with fewer tubes and, thus, fewer joints.

Figures 5A-5B show an exemplary flow forming machine of the prior art for manufacturing a tube out of a preform 70. The preform 70 processed by the machine comprises a first end 11, and a second end 12 opposite to the first end 11. In Figures 5A-5B are illustrated 3D axes (X, Y and Z) for an easier understanding of the representation of the machine only; it is readily apparent that different 3D axes or naming thereof could be provided.

The machine comprises: a mandrel 2 adapted to secure the preform 70, the mandrel 2 having a mandrel or rotation axis 21 (shown with dashed lines for illustrative purposes only) extending in an axial direction of the mandrel (along the Y dimension illustrated); a support or jaw chuck 3 adapted to clamp the first end 11 of the preform 70; and a plurality of rollers 31-34 that may be brought into contact with the preform 70 for flow forming thereof, each roller 31-34 adapted to rotate around a roller axis thereof. The plurality of rollers 31-34 is provided in a carriage 7 of the machine.

The rollers 31-34 are arranged such that a leading angle thereof is incremental in a counterclockwise direction when the rollers are seen from the support or jaw chuck 3, as illustrated in Figure 5B (in which the support or jaw chuck 3 is not illustrated for the sake of clarity). That is, when seen from said support or jaw chuck 3, a first roller 31 at the top has a first leading angle, a second roller 32 at the left has a second leading angle greater than the first leading angle, a third roller 33 at the bottom has a third leading angle greater than the second leading angle (and, thus, greater than the first leading angle), and a fourth roller 34 at the right has a fourth leading angle greater than the third angle (and, thus, greater than the first and second leading angles). Accordingly, from the first roller 31 to the fourth roller 34 in the counterclockwise direction, the leading angles of the rollers 31-34 increase. The rollers of other prior art machines may be arranged in a similar fashion, and/or with increasing leading angles in clockwise direction. In addition, the distance from each roller 31-34 to the rotation axis 21 of the mandrel 2 (the distance being measured from a contact point of each roller 31-34 that contacts the preform 70) may be different; for example, the greater the leading angle is, the closer the respective roller is to the mandrel 2 or rotation axis 21 of the mandrel 2.

In some prior art machines (not illustrated), the rollers 31-34 are arranged such that they are spaced apart in the axial direction of the mandrel 2.

As illustrated in Figure 5B, the preform 70 comprises a first portion 71a closer to the outer diameter thereof, and a second portion 71b closer to the inner diameter thereof. The four rollers 31-34 contact the first portion 71a such that the wall thickness of the preform 70 is reduced while, at the same time, the length of the preform 70 is increased. With dashed circumferential lines within portion 71a are illustrated the wall thickness reductions due to the different rollers 31-34.

The machine of Figures 5A-5B may be suitable for carrying out methods as described with reference to Figures 1A-1E, 2A-2G, 3A-3F and 4A-4I.

Figure 6 shows leading and trailing edges of a roller 4 for flow forming, the roller may be any one of the rollers 31-34 of the machine of Figures 5A-5B, or any one of the rollers 35-38 of the machine of Figures 7, 8A-8B and 9. The roller 4 comprises a leading edge 42 intended to roll the preform 70 when the roller 4 is displaced relative to the mandrel 2, and also comprises a trailing edge 43 intended to achieve a near net shape in the tube. A leading angle, represented as angle alpha (α), is defined as the angle that the leading edge 42 forms with respect to the mandrel axis 21, and a trailing edge angle, represented as angle beta (β), is defined as the angle that the trailing edge 43 forms with respect to the mandrel axis 21.

Figure 7 diagrammatically shows an arrangement of rollers of a machine in accordance with an embodiment. Four rollers 35-38 as described in the present disclosure are illustrated, but all of them are shown at a top-most portion of the preform 70 only for the sake of clarity of the leading angles and distances represented therein.

The first 35 of the four rollers comprises a first leading angle A, the second 36 of the four rollers comprises a second leading angle B, the third 37 of the four rollers comprises a third leading angle C, and a fourth 38 of the four rollers comprises a fourth leading angle D. As shown in Figure 3, A < B < C < D. The four rollers 35-38 are arranged with increasing leading angles in a direction along a mandrel 2 or rotation axis 21 of a mandrel 2 on which the preform 70 is arranged. That is to say, the first roller 35 contacts any given point of the preform 70 (the given point being along a length of the preform 70) first, the second roller 36 contacts the same given point of the preform 70 after the first roller 35, the third roller 37 contacts the same given point of the preform 70 after the second roller 36, and the fourth roller 38 contacts the same given point of the preform 70 after the third roller 37.

Further, the four rollers 35-38 are spaced apart in a direction along the mandrel 2 or the rotation axis 21. The first roller 35 is spaced apart from a support or jaw chuck (not illustrated, but it is further at the left of the figure) of a flow forming machine by a distance x₁ and from the second roller 36 by a distance d₁, the second roller 36 is spaced apart from the support or jaw chuck by a distance x₂ and spaced apart from the third roller 37 by a distance d₂, the third roller 37 is spaced apart from the support or jaw chuck by a distance x₃ and from the fourth roller 38 by a distance d₃, and the fourth roller 38 is spaced apart from the support or jaw chuck by a distance x₄; the distance x₂ is equal to x₁+d₁, the distance x₃ is equal to x₂+d₂, and the distance x₄ is equal to x₃+d₃. Even though it is not illustrated, a carriage of the flow forming machine may be adapted to stagger the four rollers 35-38 as indicated, and may be further adapted to allow adjustment of the distances.

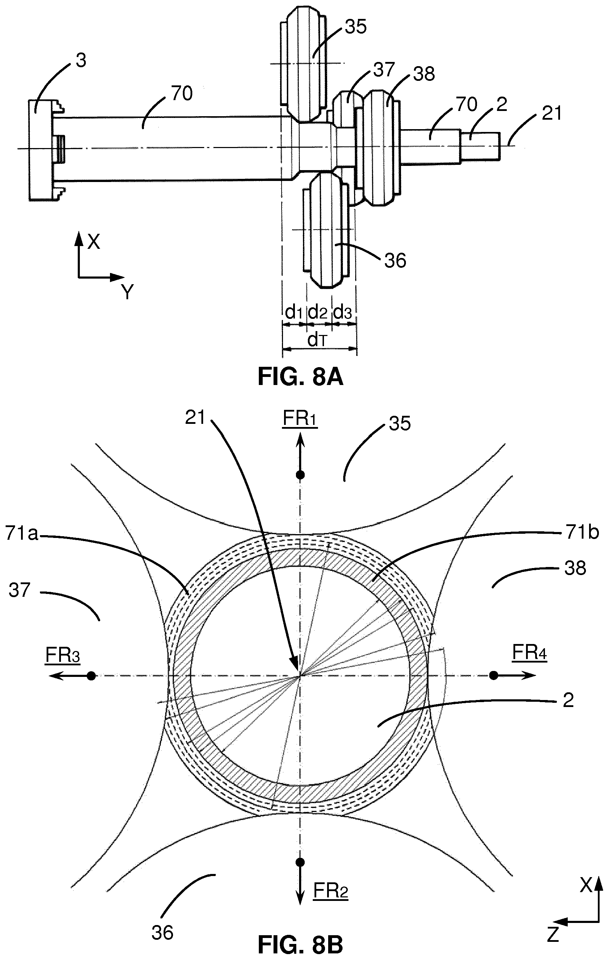

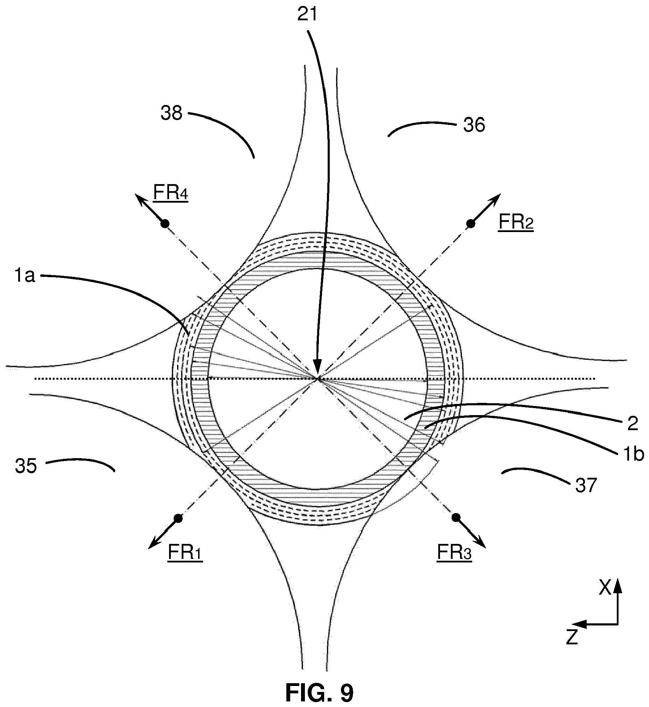

Also, in some embodiments, the machine comprises a controller or controlling device for automatically and dynamically adjusting a position of one or more rollers 35-38 in axial and/or radial directions of the mandrel 2. The controller or controlling device receives from sensors the amount of radial pressure (illustratively shown with arrows FR₁, FR₂, FR₃ and FR₄, all pointing upwards in this representation in which all the rollers 35-38 are shown above the mandrel 2, but it is readily apparent that in a real case these arrows are pointing outwardly from the preform 70 in accordance with the position of the rollers 35-38 around the preform, for instance as shown in Figures 8B and 9) supported by each of the rollers 35-38. The controller or controlling device digitally computes which position adjustments are necessary so as to balance the sum of amounts of radial pressures FR₁, FR₂, FR₃ and FR₄ and the moments of force resulting therefrom.

Figures 8A-8B show an arrangement of rollers of a machine in accordance with an embodiment. In Figure 8A the machine and, thus, the arrangement of the rollers (in Figure 8A the separations between rollers in the axial direction of the mandrel 2 have been exaggerated for illustrative purposes only) are shown from a side view, whereas in Figure 8B the machine and the arrangement of the rollers are shown from a different side view, particularly the arrangement of the rollers is seen from a support or jaw chuck 3 of the machine (the support or jaw chuck 3 not being illustrated for the sake of clarity). The same 3D axes of Figures 5A-5B have been used for the sake of clarity.

The first roller 35 has the first leading angle A, and the second roller 36 has the second leading angle B and is arranged diametrically opposed to the first roller 35 in a radial direction of the mandrel 2 (along the X dimension illustrated), although displaced in a longitudinal direction of the mandrel 2 (along the Y dimension illustrated) by a distance d₁. The third roller 37 has the third leading angle C, and the fourth roller 38 has the fourth leading angle D and is arranged diametrically opposed to the third roller 37 in the radial direction of the mandrel (along the Z dimension illustrated), although displaced in a longitudinal direction of the mandrel 2 (along the Y dimension illustrated) by a distance d₃. The second and the third rollers 36-37 are offset 90º and are spaced apart by a distance d₂. The first and the last (i.e. fourth) rollers 35, 38 are separated by a distance d_{T} in the longitudinal direction of the mandrel 2, the distance d_{T} being the sum of d₁, d₂ and d₃. The distance d_{T} is always greater than 0 mm and lower than or equal to 120 mm, and in some cases it is lower than or equal to 80 mm. Each of the distances d₁, d₂ and d₃ is greater than 0 mm and lower than 80 mm.

In this example, the mandrel 2 rotates in a counterclockwise direction when seen from the view of Figure 8B. The third roller 37 is after the first roller 35 and before the second roller 36 in the rotation direction of the mandrel 2, thus as seen in Figure 8B it is at the left of the mandrel 2. In another example, the mandrel 2 rotates in clockwise direction when seen from the same view and the third roller 37 is at the right of the mandrel 2 thereby being arranged after first roller 36 and before the second roller 36 in the rotation direction.

In other examples, the third roller 37 is after the second roller 36 and before the first roller 35 in the rotation direction of the mandrel 2.

The four rollers 35-38 contact the first portion 71a such that the wall thickness of the preform 70 is reduced while, at the same time, the length of the preform 70 is increased. With dashed circumferential lines within portion 71a are illustrated the wall thickness reductions due to the different rollers 35-38.

Although in Figures 8A-8B the first roller 35 is arranged such that it is above the mandrel 2, it is readily apparent that in other embodiments the first roller 35 is arranged such that it is below the mandrel 2 (like where the second roller 36 is illustrated) and the second roller 36 is arranged such that it is above the mandrel 2 (like there the first roller 35 is illustrated), and that in other embodiments the four rollers 35-38 are arranged with some rotation with respect to the arrangement of Figures 8A-8B, for instance as shown in Figure 9.

In some embodiments, the flow forming applied by the four rollers 35-38 to the preform 70 produces a tube with a constant wall thickness and/or constant outer diameter. In some other embodiments, for example as explained with reference to Figures 1A-1E, 2A-2G, 3A-3F and 4A-4I, the flow forming applied by the four rollers 35-38 to the preform 70 produces a tube with a variable wall thickness and/or variable outer diameter.

Figure 9 shows an arrangement of rollers of a machine in accordance with an embodiment, which is seen from a side view similar to Figure 8B (the support or jaw chuck 3 of the machine not being illustrated for the sake of clarity).

In comparison with the machine of Figures 8A-8B, the machine of Figure 9 has the rollers 35-38 arranged with a 45º offset, but the first roller 35 is also diametrically opposed to the second roller 36, and the third roller 37 is also diametrically opposed to the fourth roller 38.

The machine of Figures 8A-8B or 9 may be suitable for carrying out methods as described with reference to Figures 1A-1E, 2A-2G, 3A-3F and 4A-4I.

Even though the terms first, second, third, etc. have been used herein to describe several devices, elements or parameters, it will be understood that the devices, elements or parameters should not be limited by these terms since the terms are only used to distinguish one device, element or parameter from another. For example, the first roller could as well be named second roller and the second roller could be named first roller without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for producing a tube (101-104), the method comprising:
providing a preform (1a-1c,70) in a mandrel (2), the preform (1a-1c,70) having two ends;
flow forming the preform (1a-1c,70) with a plurality of rollers (4-5,31-38) thereby producing the tube (101-104);
**characterized in that**:
in one flow forming pass neither one of the two ends (11-12) of the preform (1a-1c,70) is flow formed; and
the method further comprises mechanically forming mechanical connection ends on the two ends (14-15) of the tube (101-104).

2. The method of claim 1, further comprising:
forming a recess (13) on a portion of the preform (1a-1c,70) not comprising any one of the two ends (11-12) of the preform (1a-1c,70); and
bringing into contact each roller of the plurality of rollers (4-5,31-38) with the preform (1a-1c,70) in the portion thereof;
wherein the plurality of rollers (4-5,31-38) is arranged such that each roller (4-5,31-38) is spaced apart from remaining rollers in an axial direction of the mandrel (2); and
wherein each roller of the plurality of rollers (4-5,31-38) has a leading angle, and the plurality of rollers (4-5,31-38) is arranged so as to flow form the preform (1a-1c,70) with increasing leading angles.

3. The method of claim 2, wherein:
the plurality of rollers (4-5,31-38) comprises four rollers (35-38);
a first roller (35) of the four rollers (35-38) has a first leading angle A, a second roller (36) of the four rollers (35-38) has a second leading angle B, a third roller (37) of the four rollers (35-38) has a third leading angle C, and a fourth roller (38) of the four rollers (35-38) has a fourth leading angle D, wherein A < B < C < D; and
the first roller (35) is diametrically opposed to the second roller (36) in a radial direction of the mandrel (2), and the third roller (37) is diametrically opposed to the fourth roller (38) in the radial direction of the mandrel (2).

4. The method of claim 3, wherein the third roller (37) is after the first roller (35) and before the second roller (36) in a rotation direction of the mandrel (2) when viewed in the axial direction of the mandrel (2).

5. The method of any one of claims 3-4, wherein A is greater than 1º and lower than or equal to 8º, B is lower than or equal to 15º, C is lower than or equal to 20º, and D is lower than or equal to 25º.

6. The method of any one of claims 3-5, wherein a distance between the first roller (35) and the fourth roller (38) in the axial direction of the mandrel (2) is greater than 0 mm and lower than or equal to 120 mm.

7. The method of any one of claims 5-6, wherein the tube (101-104) produced comprises an outer diameter greater than or equal to 200 mm and lower than or equal to 630 mm.

8. The method of any one of claims 5-7, wherein the tube (101-104) produced comprises a wall thickness greater than or equal to 15,0 mm and lower than or equal to 40,0 mm.

9. The method of any one of claims 3-8, wherein the step of flow forming the preform (1a-1c,70) with the four of rollers (35-38) comprises flow forming the preform (1a-1c,70) with the four rollers (35-38) such that the tube (101-104) produced at least comprises first one or more portions and second one or more portions, the first one or more portions comprising a first wall thickness and/or a first outer diameter, and the second one or more portions comprising a second wall thickness and/or a second outer diameter; and wherein each of the first and second wall thicknesses is greater than or equal to 15,0 mm and lower than or equal to 40,0 mm, and wherein each of the first and second outer diameters is greater than or equal to 200 mm and lower than or equal to 630 mm.

10. The method of any one of the preceding claims, wherein the plurality of rollers (4-5,31-38) is offset with 90º angles.

11. The method of any one of the preceding claims, wherein the preform (1a-1c,70) is a seamless preform (1a-1c,70).

12. The method of any one of the preceding claims, further comprising:
sensing pressures (FR₁-FR₄) radially exerted on the preform (1a-1c,70) by each roller of the plurality of rollers (4-5,31-38); and
adjusting, for at least one roller of the plurality of rollers (4-5,31-38) during the step of flow forming the preform (1a-1c,70), a position of the roller (4-5,31-38) relative to the other rollers in the axial direction of the mandrel (2) and/or a position of the roller (4-5,31-38) relative to the preform (1a-1c,70) in the radial direction of the mandrel (2), the adjustment being made with a controlling device and based on the sensed pressures (FR₁-FR₄) radially exerted on the preform (1a-1c,70), the adjustment being made such that a sum of the pressures (FR₁-FR₄) radially exerted on the preform (1a-1c,70) and a sum of moments of force on the preform (1a-1c,70) are both minimized.

13. A seamless tube (101-104) having:
an outer diameter greater than or equal to 200 mm and lower than or equal to 630 mm;
a wall thickness greater than or equal to 15,0 mm and lower than or equal to 40,0 mm; and
a length greater than or equal to 5,0 m and lower than or equal to 20,0 m;
wherein the seamless tube (101-104) is of one of the following: an Austenitic Stainless Steel, a Martensitic Stainless Steel, an Austeno-ferritic Stainless Steel, an Austenitic Nickel base Alloy, and a Super-Austenitic Stainless Steel; and
wherein both ends (14-15) of the seamless tube (101-104) have mechanical connection ends integrally formed thereon.

14. A pipeline comprising a plurality of seamless tubes (101-104) according to claim 13, wherein each seamless tube (101 -104) is mechanically connected at each end (14-15) thereof to another seamless tube (101-104) by means of the mechanical connection ends of the seamless tubes (101-104), and wherein each of a first seamless tube (101-104) and a last seamless tube (101-104) of the pipeline is only connected to one seamless tube (101-104).

15. A machine for flow forming a preform (1a-1c,70) into a tube (101-104), the machine comprising:
a mandrel (2); and
four rollers (4-5,31-38) adapted to flow form the preform (1a-1c,70) when it is provided in the mandrel (2);
wherein a first roller (35) of the four rollers (35-38) has a first leading angle A, a second roller (36) of the four rollers (35-38) has a second leading angle B, a third roller (37) of the four rollers (35-38) has a third leading angle C, and a fourth roller (38) of the four rollers (35-38) has a fourth leading angle D;
wherein A < B < C < D;
wherein each roller (35-38) of the four rollers is adapted to be spaced apart from remaining rollers in an axial direction of the mandrel (2), and wherein the four rollers (4-5,31-38) are adapted to contact the preform (1a-1c,70) in the mandrel (2) with increasing leading angles; and
wherein the first roller (35) is diametrically opposed to the second roller (36) in a radial direction of the mandrel (2), and the third roller (37) is diametrically opposed to the fourth roller (38) in the radial direction of the mandrel (2).
